# EUROPEAN PATENT SPECIFICATION

(11) **EP 3 832 380 B1**
(45) Date of publication and mention of the grant of the patent: **27.09.2023**
(21) Application number: 19856900.6
(22) Date of filing: 20.08.2019
(51) Int. Cl.: G02F 1/01, B32B 7/023

(54) **OPTICAL ELEMENT AND ELECTRONIC EQUIPMENT**
OPTISCHES ELEMENT UND ELEKTRONISCHE AUSRÜSTUNG
ÉLÉMENT OPTIQUE ET ÉQUIPEMENT ÉLECTRONIQUE

(30) Priority: 03.09.2018 JP 2018164524
(43) Date of publication of application: 09.06.2021
(73) Proprietor: Sony Group Corporation, Tokyo 108-0075 (JP)
(72) Inventor: IMAIZUMI, Shinji, Tokyo 108-0075 (JP); KADONO, Koji, Tokyo 108-0075 (JP); GRIGORENKO, Alexander Nikolaevich, Manchester, M13 9PL (GB); RODRIGUEZ MARTINEZ, Francisco Javier, Manchester, M13 9PL (GB); KRAVETS, Vasyl Grigorovuch, Manchester, M13 9PL (GB)
(74) Representative: D Young & Co LLP
(86) International application number: PCT/JP2019/032402
(87) International publication number: WO 2020/050008

(56) References cited:
- WO-A1-2015/060010
- WO-A1-2015/060010
- CN-A- 103 293 821
- CN-A- 103 293 821
- JP-A- 2013 257 482
- JP-A- 2013 257 482
- US-A1- 2018 120 595
- US-A1- 2018 120 595
- ZHANG LIWEI ET AL: "Transmission property of one-dimensional multilayer graphene-dielectric stack", OPTIK, WISSENSCHAFTLICHE VERLAG GMBH, DE, vol. 127, no. 4, 24 November 2015 (2015-11-24), pages 2030-2035, XP029381265, ISSN: 0030-4026, DOI: 10.1016/J.IJLEO.2015.11.135

## Description

### Technical Field

The present technology relates to an optical element and an electronic apparatus having a Fabry-Perot structure according to claim 1 of the appended claims.

### Background Art

As a current issue of an light modulation element capable of modulating transmitted light or reflected light, it is difficult to miniaturize and reduce a height of the element. In addition, the light modulation element configured of an MEMS (Micro Electro Mechanical System) and a liquid crystal shutter has a slow response speed, which is limited to about 1 msec (see Non-Patent Literature 1, for example).

To deal with this, in recent years, a Fabry-Perot structure type graphene dimming element has been proposed. The Fabry-Perot structure is a structure that utilizes multiple reflection and interference of light generated at a layer interface of a multilayer structure, controls an interference optical path length, and selectively reflects or transmits a specific wavelength, and is applied to a wavelength selection filter or the like, for example.

Graphene has a nature of changing optical characteristics by adjusting a carrier concentration (see Patent Literature 1, for example). Thus, by placing graphene at an interface of the Fabry-Perot structure, it may be possible to use as the light modulation element that can electrically modulate the reflected light or the transmitted light (see Non-Patent Literature 2, for example).

The light modulation element of the Fabry-Perot structure using such graphene does not need to be mechanically driven, so that it can realize to increase a response speed, to miniaturize, and to reduce a height.

### Citation List

### Patent Literature

Patent Literature 1: Japanese Patent Application Laid-open No. 2013-257482
Non-Patent Literature 1: Leonardo Midolo, two others, "Nano-opto-electro-mechanical systems", Nature. Nanotechnology 13, 2018, 11
Non-Patent Literature 2: Francisco J. Rodriguez, four others, "Solid-State Electrolyte-Gated Graphene in Optical Modulators," ADVANCED MATERIALS 2017, 1606372

CN 103293821 discloses an optical element.

US 2018/120595 discloses a multi-stack graphene structure.

### Disclosure of Invention

### Technical Problem

However, a light absorption rate of graphene is as small as 2.3% in one graphene layer, and an effective light modulation factor of the Fabry-Perot structure type light modulation element having one graphene layer is 10 to 20%. Therefore, further improvement of the light modulation factor is necessary.

In view of the above circumstances, an object of the present technology is to provide an optical element and an electronic apparatus that can be miniaturized, reduce a height, and increase a response speed as well as realizing modulation with a high transmitted light intensity or a high reflected light intensity.

### Solution to Problem

To achieve the above object, an optical element according to the present technology as defined by the appended claims includes a first light reflecting layer, a first dielectric thick film layer, a multilayer film laminate, a second dielectric thick film layer, and a second light reflecting layer with other limitations as defined in claim 1.

The first dielectric thick film layer is formed of thin films capable of controlling optical transition energy by a Fermi level adjustment and a dielectric thin film that is an atomic layer thin film arranged between a plurality of the transparent conductor thin films.

The second dielectric thick film layer is formed of a dielectric and is arranged on the multilayer film laminate.

The second light reflecting layer is arranged on the second dielectric thick film layer.

According to this configuration, by a multiple reflection and interference of light generated at each interface between the first light reflecting layer and the first dielectric thick film layer, the multilayer film laminate, the second dielectric thick film layer, and the second light reflecting layer, resonance (Fabry-Perot resonance) occurs in light in a specific wavelength range within an element structure, and the light of the specific wavelength is resonantly absorbed. At this time, the optical transition energy of the transparent conductor thin film can be controlled by varying a Fermi level of the transparent conductor thin film (adjustment of charge concentration, etc.), and it is possible to modulate an absorption amount of light in a resonant wavelength range by varying the absorption amount of light of the transparent conductor thin film. In addition, the multilayer film laminate has a configuration that the dielectric thin film is arranged between a plurality of the transparent conductor thin films, to thereby increasing the absorption amount of light varied. Furthermore, by using the dielectric thin film of the atomic layer thin film, it is possible to reduce the height of the optical element, suppress broadening of an absorption peak, and to suppress angle dependency.

The multilayer film laminate may include a plurality of the dielectric thin films.

A plurality of the transparent conductive thin films may be a graphene thin film, a carbon thin film, a carbon nanotube thin film, an atomic layer thin film having metallic characteristics, semi-metallic characteristics or a narrow band gap, or a conductive thin film capable of forming an impurity level in a band gap of 3 eV or more and 4 eV or less and capable of carrier trapping.

Each of a plurality of the transparent conductor thin films may be an atomic layer thin film including an atomic layer thin film of one atomic layer or two atomic layers, or a conductive thin film having a thickness of 0.1 nm or more and 5 nm or less.

The atomic layer thin film may be formed of a layered compound including any one element of C, Si, Ge, Sb, and P.

The atomic layer thin film is formed of a layered compound represented by a composition formula of MX₂, where
M may be any of Ti, Zr, Hf, V, Nb, Ta, Mo, W, Sc, Mn, Fe, Ni, Cr, Pd, Pt, Re, Ga, Ge, Sn, Pb and In, and
X may be any of O, S, Se, and Te,

or is formed of a composition formula of MX, where
   M may be Ga or In, and
   X may be any of O, S, Se, and Te,
or is formed of a layered compound represented by a composition formula of M₂X₃, where
   M may be Bi, and
   X may be any of O, S, Se, and Te.

The atomic layer thin film is formed of a layered compound represented by a composition formula of LₓM₁₋ₓA_{y}B_{1-Y} (0 < X < 1), (0 ≤ Y ≤ 1), where
L may be any of Ti, Zr, Hf, V, Nb, Ta, Mo, W, Sc, Mn, Fe, Ni, Cr, Pd, Pt, Re, Ga, Ge, Sn, Pb and In,
M may be any of Ti, Zr, Hf, V, Nb, Ta, Mo, W, Sc, Mn, Fe, Ni, Cr, Pd, Pt, Re, Ga, Ge, Sn, Pb and In,
A may be any of N, O, P, S, Se, and Te, and
B may be any of N, O, P, S, Se, and Te.

The conductive thin film is formed of an oxide represented by a composition formula of L_{X}M_{Y}O (0 ≤ X ≤ 1, 0 ≤ Y ≤ 1), where
L may be any of Sb, F, As, Nb, Ta, Sn, Ge, Mo, Ti, Zr, Hf, W, Te, Al, Ga, B, In, Y, Sc, V, and Si, and
M may be any of Sb, F, As, Nb, Ta, Sn, Ge, Mo, Ti, Zr, Hf, W, Te, Al, Ga, B, In, Y, Sc, V, and Si.

The dielectric thin film may be a dielectric atomic layer thin film or a semiconductor atomic layer thin film having a band gap of 1 meV or more.

The dielectric thin film may have a thickness of 10 nm or less.

The dielectric atomic layer thin film may be formed of hexagonal boron nitride.

The dielectric atomic layer thin film is formed of a layered compound represented by a composition formula of MX₂, where
M may be Ti, Zr, Hf, V, Nb, Ta, Mo, W, Sc, Mn, Fe, Ni, Cr, Pd, Pt, Re, Ga, Ge, Sn, Pb, and In, and
X may be any of O, S, Se, and Te.

The dielectric thin film is formed of a layered compound called mica represented by a composition formula of X₂Y_{4~6}Z₈O₂₀A₄, where
X may be any of K, Na, Ca, Ba, Rb, and Cs,
Y may be any of Al, Mg, Fe, Mn, Cr, Ti and Li,
Z may be any of Si, Al, Fe, and Ti, and
A may be OH or F.

The dielectric thin film may be formed of any one of Al₂O₃, HfO₂, SiO₂, La₂O₃, SiO₂, ZrO₂, SrTiO₃, Ta₂O₅, Ti_{0.87}O₂, Ti_{0.91}O₂, Ti₄O₉, Ti₄O₁₁, TiO₂, ZnO, RuO₂, MnO₂, VS₂, LaAlO₃, Nb₂O₅, SiN, BN, BiFeO₃, BaTiO₃, SiTiO₃, PbZrO₃, PbTiO₃, PbZrTiO₃, SrBi₂Ta₂O₉, and Baᵢ₋ₓSrₓTiO₃ (0 ≤ x ≤ 1) .

The dielectric thin film may be formed of a layered oxide of any one of TiₓO₂ (0 < x ≤ 1), Ti_{0.3}Co_{0.2}O₂, Ti_{0.6}Fe_{0.4}O₂, Ti_{(5.2-2x)/6}Mn_{x/2}O₂ (0 ≤ x ≤ 0.4), Ti_{0.8-x/4}Fe_{x/2}Co_{0.2-x/4}O₂ (0 ≤ x ≤ 0.8), MnO₂, Mn₃O₇, Nb₃O₈, NbₑO₁₇, TiNbO₅, Ti₂NbO₇, Ti₃NbO₁₄, TaO₃, LaNb₂O₇, Ca₂Nb₃O₁₀, Sr₂Nb₃O₁₀, Ca₂Nb₃O₁₀, Ca₂Ta₃O₁₀, Sr₂Ta₃O₁₀, SrBi₄Ti₄O₁₅, and Ca₂Naₘ₋₃NbₘO₃ₘ₊₁ (3 ≤ m ≤ 6) .

The dielectric thin film may be formed of a layered compound including any one element of Si, Ge, Sb, and P.

The dielectric thin film may be formed of a material having a band gap larger than that of the material of a plurality of the transparent conductive thin films.

The first dielectric thick film layer and the second dielectric thick film layer may be formed of any of Si, Ge, a fluoride, NaCl, KBr, ZnS, ZnSe, GeS, GeSbS, diamond, carbon nitride, and silicon nitride.

The first electrical thick layer and the second electrical thick layer are each formed of a chalcogenide glass represented by a composition formula of L_{X}M_{Y}N_{z} (0 ≤ X ≤ 1), (0 ≤ Y ≤ 1), (0 ≤ Z ≤ 1), where
L may be any of Si, Ge, P, As, Sb, Al, Ga, In, Tl, Pb and Zn,
M may be any of Si, Ge, P, As, Sb, Al, Ga, In, Tl, Pb and Zn, and
N may be any of O, S, Se, and Te.

The first dielectric thick film layer and the second dielectric thick film layer may be each formed of a layered compound including any one element of C, Si, Ge, Sb, and P.

The first dielectric thick film layer and the second dielectric thick film layer are each formed of a layered compound represented by a composition formula of MX₂, where M may be any of Ti, Zr, Hf, V, Nb, Ta, Mo, W, Sc, Mn, Fe, Ni, Cr, Pd, Pt, Re, Ga, Ge, Sn, Pb, and In, and X may be any of O, S, Se, and Te.

The first dielectric thick film layer and the second dielectric thick film layer are each formed of a layered compound represented by a composition formula of MX, where M may be Ga or In, and X may be any of O, S, Se, and Te.

The first dielectric thick film layer and the second dielectric thick film layer are each formed of a layered compound represented by a composition formula of M₂X₃, where M may be Bi, and X may be any of O, S, Se, and Te.

The first thickness layer and the second thickness layer are each formed of a layered compound represented by a composition formula of L_{X}M_{1-X}A_{Y}B_{1-Y} (0 ≤ X ≤ 1), (0 ≤ Y ≤ 1), where L may be any of Ti, Zr, Hf, V, Nb, Ta, Mo, W, Sc, Mn, Fe, Ni, Cr, Pd, Pt, Re, Ga, Ge, Sn, Pb and In, M may be any of Ti, Zr, Hf, V, Nb, Ta, Mo, W, Sc, Mn, Fe, Ni, Cr, Pd, Pt, Re, Ga, Ge, Sn, Pb, and In, A may be any of N, O, P, S, Se, and Te, and B may be any of N, O, P, S, Se, and Te.

The first light reflecting layer and the second light reflecting layer transmit or reflect light at a constant ratio between the first light reflecting layer and the second light reflecting layer, and
at least one of the first light reflecting layer, the second light reflecting layer, or a plurality of the transparent conductor thin films may be connected to a power supply that applies a predetermined potential difference between a plurality of the transparent conductor thin films and the first light reflecting layer, between a plurality of the transparent conductor thin films and the second light reflecting layer, or between each of a plurality of the transparent conductor thin films.

Any one of the first light reflecting layer or the second light reflecting layer may be an electrode for applying the potential difference, the other may be a multilayer film reflector obtained by laminating two or more dielectrics.

Alternatively, both of the first light reflecting layer and the second light reflecting layer may be the multilayer film reflector in which two or more kinds of dielectrics are laminated, and a plurality of the transparent conductor thin films may be connected to a power source for applying the predetermined potential difference between a plurality of the transparent conductor thin films.

In order to achieve the above object, an electronic apparatus according to the present technology includes an optical element. The optical element includes a first dielectric thick film layer formed of a dielectric and arranged on the first light reflecting layer, a multilayer film laminate arranged on the first dielectric thick film layer including a plurality of transparent conductor thin films capable of controlling optical transition energy by a Fermi level adjustment and a dielectric thin film that is an atomic layer thin film arranged between a plurality of the transparent conductor thin films, a second dielectric thick film layer formed of a dielectric and arranged on the multilayer film laminate, and a second light reflecting layer arranged on the second dielectric thick film layer.

### Advantageous Effects of Invention

As described above, according to the present technology, it is possible to provide an optical element and an electronic apparatus that can be miniaturized, reduce a height, and increase a response speed as well as realizing modulation with a high transmitted light intensity or a high reflected light intensity. Note that the effect described here is not necessarily limitative, and any of the effects described in the present disclosure may be provided.

### Brief Description of Drawings

[Fig. 1] Fig. 1 is a cross-sectional view of an optical element according to an embodiment of the present technology.
[Fig. 2] Fig. 2 is a plan view of the optical element.
[Fig. 3] Fig. 3 is an example of a reflected light spectrum of the optical element.
[Fig. 4] Fig. 4 is a cross-sectional view of an optical element according to an embodiment of the present technology.
[Fig. 5] Fig. 5 is a plan view of the optical element.
[Fig. 6] Fig. 6 is a cross-sectional view of an optical element according to an embodiment of the present technology.
[Fig. 7] Fig. 7 is a cross-sectional view of an optical element according to an embodiment of the present technology.
[Fig. 8] Fig. 8 is a cross-sectional view of an optical element according to Comparative Example.
[Fig. 9] Fig. 9 is a reflected light spectrum measured in an optical element according to Comparative Example.
[Fig. 10] Fig. 10 is a reflected light spectrum measured in an optical element according to Example 1.
[Fig. 11] Fig. 11 is a reflected light spectrum measured in an optical element according to Example 2.
[Fig. 12] Fig. 12 is a reflected light spectrum measured in an optical element according to Comparative Example of Example 3.
[Fig. 13] Fig. 13 is a reflected light spectrum measured in an optical element according to Example 3.
[Fig. 14] Fig. 14 is a reflected light spectrum measured in an optical element according to Comparative Example of Example 4.
[Fig. 15] Fig. 15 is a reflected light spectrum measured in an optical element according to Example 4.
[Fig. 16] Fig. 16 is a reflected light spectrum measured in an optical element according to Comparative Example of Example 5.
[Fig. 17] Fig. 17 is a reflected light spectrum measured in an optical element according to Example 5.
[Fig. 18] Fig. 18 is a reflected light spectrum measured in an optical element according to Comparative Example of Example 6.
[Fig. 19] Fig. 19 is a reflected light spectrum measured in an optical element according to Example 6.
[Fig. 20] Fig. 20 is a reflected light spectrum measured in an optical element according to Comparative Example of Example 7.
[Fig. 21] Fig. 21 is a reflected light spectrum measured in an optical element according to Example 7.
[Fig. 22] Fig. 22 is a reflected light spectrum measured in an optical element according to Comparative Example of Example 8.
[Fig. 23] Fig. 23 is a reflected light spectrum measured in an optical element according to Example 8. Mode(s) for Carrying Out the Invention

### (First Embodiment)

An optical element according to a first embodiment of the present technology will be described.

### [Structure of Optical Element]

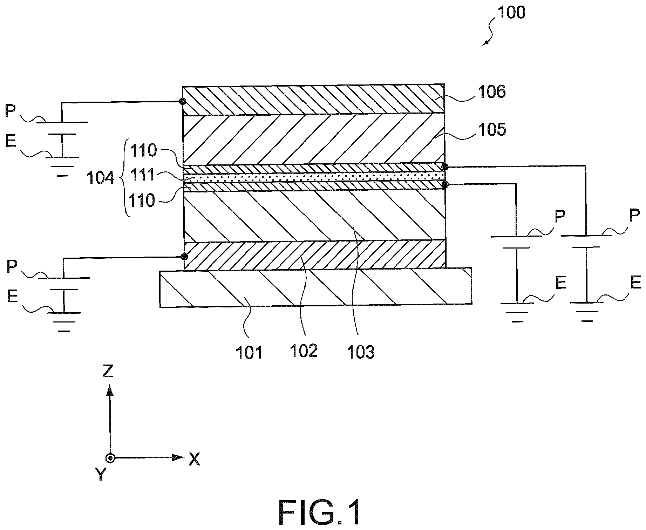

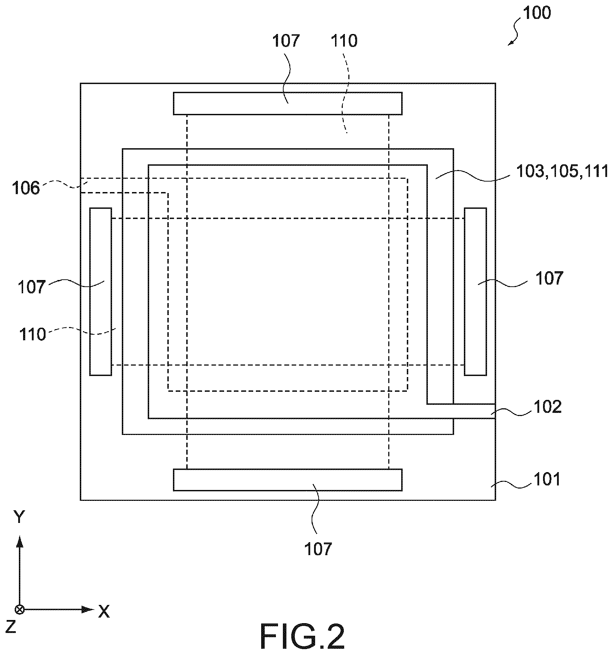

Fig. 1 is a cross-sectional view showing a structure of an optical element 100 according to a first embodiment of the present technology, and Fig. 2 is a plan view of the optical element 100. Note that, in the following drawings, three mutually orthogonal directions are referred to as the X direction, the Y direction, and the Z direction, respectively.

The optical element 100 has a Fabry-Perot structure, and is an light modulation element for modulating incident light. The optical element 100 may be a transmissive type light modulation element that transmits the incident light, or may be a reflective type light modulation element that reflects the incident light.

As shown in Figs. 1 and 2, the optical element 100 includes a substrate 101, a first light reflecting layer 102, a first dielectric thick film layer 103, a multilayer film laminate 104, a second dielectric thick film layer 105, a second light reflecting layer 106, and electrodes 107.

The substrate 101 supports each layer of the optical element 100. The substrate 101 has a light transparency, has desirably a smooth surface, and desirably includes quartz, sapphire, SiO₂, CaF₂ or the like.

The first light reflecting layer 102 is arranged on the substrate 101, and reflects a portion or all of the light incident from a first dielectric thick film layer 103 side on the first dielectric thick film layer 103 side.

The material of the first light reflecting layer 102 can be arbitrarily selected depending on a wavelength of target modulated light, and can include, for example, Au, Ag, Cu, Al, Pt, Cr, Ti, Pd, ITO (Indium Tin Oxide), IGZO (Indium Gallium Zinc Oxide), graphite, or graphene.

A thickness of the first light reflecting layer 102 can be determined from a range of 1 nm or more and 100 nm or less depending on a wavelength of a target absorption wavelength.

The first dielectric thick film layer 103 is arranged on the first light reflecting layer 102 to electrically shield the multilayer film laminate 104 and the first light reflecting layer 102.

The first dielectric thick film layer 103 is formed of a solid dielectric. Specifically, examples of a material of the first dielectric thick film layer 103 include oxide dielectrics (Al₂O₃, HfO₂, SiO₂, La₂O₃, SiO₂, STO, Ta₂O₅, TiO₂ and ZnO, etc.), nitride dielectrics (SiN and BN, etc.), and other ferroelectrics (BiFeO₃, BaTiO₃, PbZrO₃, PbTiO₃, PbZrTiO₃, and SrBi₂Ta₂O₉, etc.).

In addition, examples of a material of the first thick film layer 103 include layered oxides (TiₓO₂ (0 < x ≤ 1), Ti_{0.8}Co_{0.2}O₂, Ti_{0.6}Fe_{0.4}O₂, Ti_{(5.2-2x)/6}Mn_{x/2}O₂ (0 ≤ x ≤ 0.4), Ti_{0.8-x/4}Fe_{x/2}Co_{0.2-x/4}O₂ (0 ≤ x ≤ 0.8), MnO₂, Mn₃O₇, Nb₃O₃, NbₑO₁₇, TiNbO₃, Ti₂NbO₃, Ti₃NbO₁₄, TaO₃, LaNb₂O₇, Ca₂Nb₃O₁₀, Sr₂Nb₃O₁₀, Ca₂Nb₃O₁₀, Ca₂Ta₃O₁₀, Sr₂Ta₃O₁₀ and SrBi₄Ti₄O₁₅).

A thickness of the first dielectric thick film layer 103 can be determined from a range of 10 nm or more and 100 nm or less depending on the target absorption wavelength.

The multilayer film laminate 104 is arranged on the first dielectric thick film layer 103, and is formed by alternately laminating a transparent conductor thin film 110 and a dielectric thin film 111.

As shown in Fig. 1, the multilayer film laminate 104 may include two transparent conductor thin films 110 and one dielectric thin film 111 arranged therebetween. Furthermore, as described later, the multilayer film laminate 104 may include a larger number of the transparent conductor thin films 110 and a plurality of the dielectric thin films 111 arranged therebetween.

The transparent conductor thin film 110 is a conductive thin film having the light transparency that is capable of controlling the optical transition energy by the Fermi level adjustment, in other words, that has the optical characteristics being changed by adjusting the carrier concentration.

Specifically, the transparent conductor thin film 110 may be a graphene thin film, a carbon thin film, a carbon nanotube thin film, a conductive atomic layer thin film having metallic characteristics, semimetallic characteristics, or a narrow band gap (hereinafter, conductor atomic layer thin film), or a conductive thin film capable of trapping a carrier for forming an impurity level within a band gap of 3 eV or more and 4 eV or less.

Examples of a material of the conductor atomic layer thin film include a layered compound formed of any one element of C, Si, Ge, Sb, and P.

In addition, examples of the material of the conductive atomic layer thin film include a layered compound represented by a composition formula of MX₂. M is any of Ti, Zr, Hf, V, Nb, Ta, Mo, W, Sc, Mn, Fe, Ni, Cr, Pd, Pt, Re, Ga, Ge, Sn, Pb, and In, and X is any of O, S, Se and Te.

In addition, examples of the material of the conductor atomic layer thin film include a layered compound represented by a composition formula of MX. M is Ga or In, and X is any of O, S, Se, and Te. In addition, examples of the material of the conductive atomic layer thin film include a layered compound represented by a composition formula of M₂X₃. M is Bi, and X is any of O, S, Se and Te.

Furthermore, examples of the material of the conductive atomic layer thin film include a layered compound represented by a composition formula of LₓM_{1-X}A_{Y}B_{1-Y} (0 < X < 1) and (0 ≤ Y ≤ 1). L is any of Ti, Zr, Hf, V, Nb, Ta, Mo, W, Sc, Mn, Fe, Ni, Cr, Pd, Pt, Re, Ga, Ge, Sn, Pb, and In, and M is any of Ti, Zr, Hf, V, Nb, Ta, Mo, W, Sc, Mn, Fe, Ni, Cr, Pd, Pt, Re, Ga, Ge, Sn, Pb, and In. A is any of N, O, P, S, Se, and Te, and B is any of N, O, P, S, Se, and Te.

Furthermore, examples of a material of the conductive thin film capable of trapping the carrier for forming the impurity level within the band gap of 3 eV or more and 4 eV or less include an oxide represented by a composition formula of L_{X}M_{Y}O (0 ≤ X ≤ 1, 0 ≤ Y ≤ 1). L is any of Sb, F, As, Nb, Ta, Sn, Ge, Ti, Zr, Hf, W, Te, Al, Ga, B, In, Y, Sc, V, Si, and M is any of Sb, F, As, Nb, Ta, Sn, Ge, Mo, Ti, Zr, Hf, W, Te, Al, Ga, B, In, Y, Sc, V, and Si.

Note that a plurality of the transparent conductor thin films 110 forming the multilayer film laminate 104 may be formed of all the same material or may be formed of different materials from each other.

In a case where the transparent conductor thin film 110 is the atomic layer thin film, a thickness of the transparent conductor thin film 110 is desirably a thickness of one atomic layer or two atomic layers. In addition, in a case where the transparent conductor thin film 110 is not the atomic layer thin film, the thickness is conforming to the thickness of one atomic layer or two atomic layers, that is, desirably 0.1 nm or more and 5 nm or less.

A plurality of the transparent conductor thin films 110 forming the multilayer film laminate 104 may all have the same thickness, or may have different thicknesses from each other.

The dielectric thin film 111 is the atomic layer thin film arranged between the transparent conductive thin films 110 to electrically shield between the transparent conductive thin films 110.

The dielectric thin film 111 is the atomic layer thin film formed of a dielectric (hereinafter, dielectric atomic layer thin film) or a semiconductor, and is the atomic layer thin film having a band gap of 1 meV or more (hereinafter, semiconductor atomic layer thin film).

A specific example of a material of the dielectric atomic layer thin film is hexagonal boron nitride (h-BN).

In addition, examples of the material of the dielectric atomic layer thin film include a layered compound represented by a composition formula of MX₂. M is any of Ti, Zr, Hf, V, Nb, Ta, Mo, W, Sc, Mn, Fe, Ni, Cr, Pd, Pt, Re, Ga, Ge, Sn, Pb and In, and X is any of O, S, Se and Te.

Furthermore, examples of the material of the dielectric thin film 111 include a layered compound called mica represented by a composition formula of X₂Y_{4~6}Z₈O₂₀A₄. X is any of K, Na, Ca, Ba, Rb and Cs, Y is any of Al, Mg, Fe, Mn, Cr, Ti and Li. Z is any of Si, Al, Fe and Ti, and A is OH or F.

Furthermore, examples of the material of the dielectric thin film 111 include an oxide electric (such as Al₂O₃, HfO₂, SiO₂, La₂O₃, SiO₂, ZrO₂, SrTiO₃, Ta₂O₅, Ti_{0.87}O₂, Ti_{0.91}O₂, Ti₄O₉, Ti₄O₁₁, TiO₂, ZnO, RuO₂, MnO₂, LaAlO₃ and Nb₂O₃), a nitride electric (such as SiN and BN), a sulfide electric (such as VS₂), or other ferroelectric (such as BiFeO₃, BaTiO₃, SiTiO₃, PbZrO₃, PbTiO₃, PbZrTiO₃, SrBi₂Ta₂O₉ and Ba₁₋ₓSrₓTiO (such as 0 ≤ x ≤ 1)).

Furthermore, examples of the material of the dielectric thin film 111 include a layered oxide (TiₓO₂ (0 < x ≤ 1), Ti_{0.8}Co_{0.2}O₂, Ti_{0.6}Fe_{0.4}O₂, Ti_{(5.2-2x)/6}Mn_{x/2}O₂ (0 ≤ x ≤ 0.4), Ti_{0.8-x/4}Fe_{x/2}Co_{0.2-x/4}O₂ (0 ≤ x ≤ 0.8), MnO₂, Mn₃O₇, Nb₃O₈, NbₑO₁₇, TiNbO₅, Ti₂NbO₇, Ti₃NbO₁₄, TaO₃, LaNb₂O₇, Ca₂Nb₃O₁₀, Sr₂Nb₃O₁₀, Ca₂Nb₃O₁₀, Ca₂Ta₃O₁₀, Sr₂Ta₃O₁₀, SrBi₄Ti₄O₁₅ and Ca₂Naₘ₋₃NbₘO₃ₘ₊₁ (m = 3 to 6)).

Furthermore, examples of the material of the dielectric thin film 111 include a layered compound formed of any one element of Si, Ge, Sb, and P.

A thickness of the dielectric thin film 111 is desirably 10 nm or less in order to suppress an optical path length difference between the transparent conductor thin films 110.

Incidentally, although the material of the transparent conductor thin film 110 and the material of the dielectric thin film 111 described above are overlapped, in one optical element 100, the dielectric thin film 111 may be formed of a material having a band gap larger than that of the material of the transparent conductor thin film 110.

The second dielectric thick film layer 105 is arranged on the multilayer film laminate 104 to electrically shield the multilayer film laminate 104 and the second light reflecting layer 106.

The second dielectric thick film layer 105 is formed of the solid dielectric, specifically may be formed of any of the materials of the first dielectric thick film layer 103 described above. The material of the second dielectric thick film layer 105 may be the same as or different from the materials of the first dielectric thick film layer 103.

The thickness of the second dielectric thick film layer 105 can be determined depending on a target absorption wavelength from a range of 10 nm or more and 350 nm or less. The thickness of the second dielectric thick film layer 105 may be the same as the thickness of the first dielectric thick film layer 103 or may be different.

The second light reflecting layer 106 is arranged on the second dielectric thick film layer 105 and transmits light incident from a side opposite to the second dielectric thick film layer 105 (in Fig. 1, above). In addition, the second light reflecting layer 106 reflects a portion or all of the light incident from a second dielectric thick film layer 105 side to the second dielectric thick film layer 105 side.

The material of the second light reflecting layer 106 can be arbitrarily selected according to the wavelength of the target modulated light, and can be formed of any of the materials of the first light reflecting layer 102 described above. The material of the second light reflecting layer 106 may be the same as or different from the material of the first light reflecting layer 102.

The thickness of the second light reflecting layer 106 can be determined depending on the wavelength of the target modulated light from a range of 1 nm or more and 100 nm or less.

Each electrode 107 is connected to the transparent conductor thin film 110 as shown in Fig. 2. The electrode 107 is arranged on the first dielectric thick film layer 103 in the vicinity of an end of the transparent conductor thin film 110 and is coated with the second dielectric thick film layer 105. The electrode 107 is formed of any conductive material such as Au.

### [Electrical Connection]

As shown in Fig. 1, the first light reflecting layer 102, the second light reflecting layer 106, and the transparent conductor thin film 110 are respectively connected to a power source P, and the power source P is connected to a ground E.

Thus, the optical element 100 is configured to be capable of applying the predetermined potential difference between the first light reflecting layer 102 and the second light reflecting layer 106 and each transparent conductor thin film 110.

Note that the optical element 100 may be configured to apply the predetermined potential difference between the first light reflecting layer 102 and the second light reflecting layer 106 and the transparent conductor thin film 110 or between each transparent conductor thin film 110, and all of the first light reflecting layer 102, the second light reflecting layer 106, and the transparent conductor thin film 110 may not be connected to the power supply P and the ground E.

For example, the first light reflecting layer 102 and the second light reflecting layer 106 may be connected to the ground, and the transparent conductor thin film 110 may be connected to the power source that produces the predetermined potential difference with respect to the ground. Also, the transparent conductor thin film 110 may be connected to the ground, and the first light reflecting layer 102 and the second light reflecting layer 106 may be connected to the power source that produces the predetermined potential difference with respect to the ground. Alternatively, each layer may constitute a floating electrode instead of being connected to the ground.

Furthermore, the optical element 100 may be configured to be capable of applying the predetermined potential difference between any one of the first light reflecting layer 102 or the second light reflecting layer 106 and the transparent conductor thin film 110.

For example, in a case where the predetermined potential difference is applied between the first light reflecting layer 102 and the transparent conductor thin film 110, the first light reflecting layer 102 and the transparent conductor thin film 110 are connected to the power source or the ground, or are the floating electrodes functioning as the electrodes. On the other hand, since the second light reflecting layer 106 is not used as the electrode and may be an insulator.

Similarly, in a case where the predetermined potential difference is applied between the second light reflecting layer 106 and the transparent conductor thin film 110, the second light reflecting layer 106 and the transparent conductor thin film 110 are connected to the power source or the ground, or are floating electrodes functioning as the electrodes. On the other hand, since the first light reflecting layer 102 is not used as the electrode, it may be the insulator.

Furthermore, in a case where the optical element 100 applies the predetermined potential difference between each transparent conductor thin film 110, each transparent conductor thin film 110 is connected to the power source P or the ground E, or is a floating electrode functioning as the electrode. On the other hand, in this case, since the first light reflecting layer 102 and the second light reflecting layer 106 are not used as the electrodes, they may be the insulators.

The optical element 100 has the configuration described above. Although there is no particular limitation on a method of producing the optical element 100, it is possible to produce by, for example, the production method described in Non-Patent Literature 2.

### [Operation of Optical Element]

An operation of the optical element 100 will be described.

When light is incident on the optical element 100 from a second light reflecting layer 106 side (in Fig. 1, above), the light is transmitted through the second light reflecting layer 106, the second dielectric thick film layer 105, the multilayer film laminate 104, and the first dielectric thick film layer 103, and reaches the first light reflecting layer 102.

The light is reflected by the first light reflecting layer 102, is transmitted through the first dielectric thick film layer 103, the multilayer film laminate 104, and the second dielectric thick film layer 105, and is reflected by the second light reflecting layer 106. Thereafter, the light is repeatedly reflected and interfered by the first light reflecting layer 102 and the second light reflecting layer 106, and generates resonance (Fabry-Perot resonance).

In a case where the optical element 100 is the reflective type light modulation element, the second light reflecting layer 106 is configured to reflect a portion of the light and transmit a portion thereof. Therefore, the light is transmitted through the second light reflecting layer 106, and is emitted from the optical element 100.

Furthermore, in a case where the optical element 100 is the transmissive type light modulation element, the first light reflecting layer 102 is configured to reflect a portion of the light and transmits a portion thereof. Therefore, the light is transmitted through the first light reflecting layer 102 and the substrate 101, and is emitted from the optical element 100.

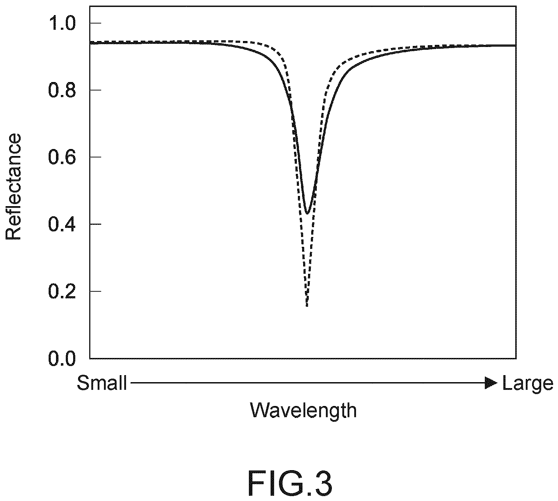

Here, the light causes interference by multiple scattering occurring at a layer interface of each layer, and components of a specific wavelength are selectively absorbed (resonantly absorbed). Fig. 3 is an example of a reflected light spectrum of the optical element 100. As shown by the solid line in the same figure, in the case of the reflective type light modulation element, a reflectance decreases at the specific wavelength. Note that it is also possible to increase the reflectance at the specific wavelength by changing the film thicknesses of the first light reflecting layer 102 and the second light reflecting layer 106.

This specific wavelength (hereinafter, absorption wavelength) λ is determined by kinds of the materials and an interlayer distance between the second light reflecting layer 106 and the first light reflecting layer 102. If the kinds of the materials of the second dielectric thick film layer 105 and the first dielectric thick film layer 103 are the same (refractive index: n), an interlayer distance h between the second light reflecting layer 106 and the first light reflecting layer 102 can be roughly estimated as λ/4n.

Furthermore, the transparent conductor thin film 110 of the multilayer film laminate 104 is the thin film capable of controlling the optical transition energy by the Fermi level adjustment as described above. Therefore, it is possible to change the optical characteristics by applying the potential difference to the transparent conductor thin film 110, and adjusting the carrier concentration.

Fig. 3 shows the reflectance of the optical element 100 in a case where the predetermined charge is injected into the transparent conductor thin film 110 by a dashed line. As shown in the same figure, by injecting the charges into the transparent conductor thin film 110, it is possible to vary the reflectance in the predetermined wavelength range.

Furthermore, the optical element 100 has a structure in which the dielectric thin film 111 is arranged between the two layers of the transparent conductor thin films 110. By making the transparent conductor thin film 110 to be the two layers, it is possible to increase a light absorption rate in the multilayer film laminate 104 by a factor of two and increase a range of variation (modulation factor) of a resonance absorption rate (see Examples).

Furthermore, by making the dielectric thin film 111 to be the atomic layer thin film, thickening of the multilayer film laminate 104 is suppressed, and in addition, the optical path length between the films of each transparent conductor thin film 110 is reduced, so that a difference in a resonance absorption effect of the transparent conductor thin film 110 at each position is reduced, and broadening of a transmission peak or a reflection peak (see Fig. 3) of the optical element 100 can be suppressed.

As described above, in the optical element 100, the light modulation is possible by applying the potential difference to the transparent conductor thin film 110, and since there is no need to be mechanically driven, it is possible to realize the light modulation element having a high response speed and a high light modulation factor.

### [Multilayer Film Laminate]

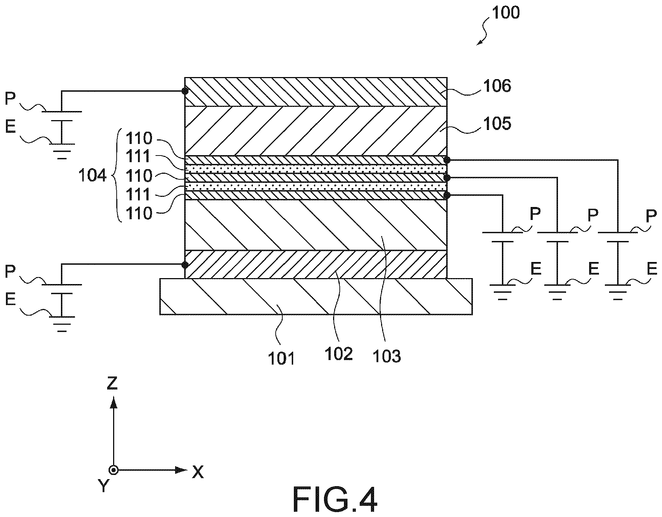

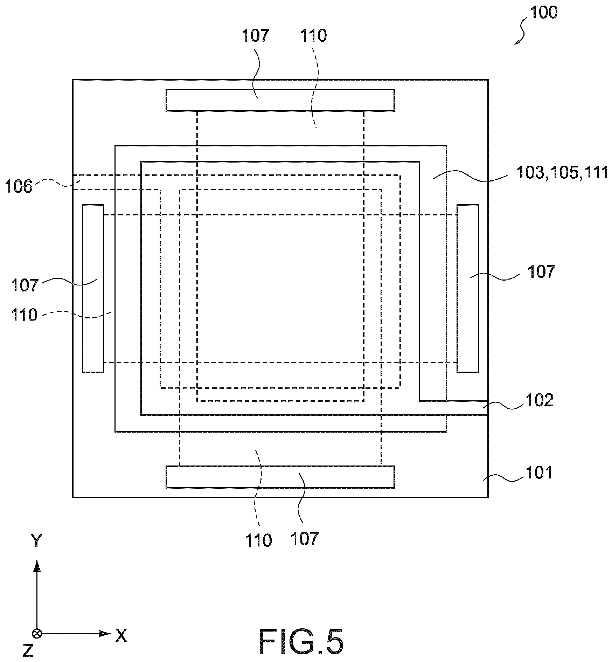

In the above description, the multilayer film laminate 104 has one layer of the dielectric thin film 111 arranged between two layers of the transparent conductor thin films 110, but may have a larger number of the transparent conductor thin films 110 and the dielectric thin films 111. Fig. 4 is a cross-sectional view of the optical element 100 including the multilayer film laminate 104, and Fig. 5 is a plan view of the optical element 100.

As shown in the same figures, the multilayer film laminate 104 may have three layers of the transparent conductor thin films 110 and two layers of the dielectric thin films 111 arranged between the respective transparent conductor thin films 110.

By using the three layers of the transparent conductor thin films 110, it is possible to increase the light absorption rate in the transparent conductor thin film 110 by a factor of three and increase the modulation factor of the resonant light absorption rate of the optical element 100 (see Examples).

Furthermore, the multilayer film laminate 104 may have a much larger number of transparent conductor thin films 110 and dielectric thin films 111. For example, the multilayer film laminate 104 may have ten layers or less of the transparent conductor thin films 110 and the dielectric thin films 111 arranged between the transparent conductor thin films 110.

Note that a plurality of the dielectric thin films 111 constituting the multilayer film laminate 104 may all be formed of the same material, or may be formed of different materials from each other.

Furthermore, a plurality of the dielectric thin films 111 constituting the multilayer film laminate 104 may all have the same thickness, or may have different thicknesses from each other.

### [Reflector]

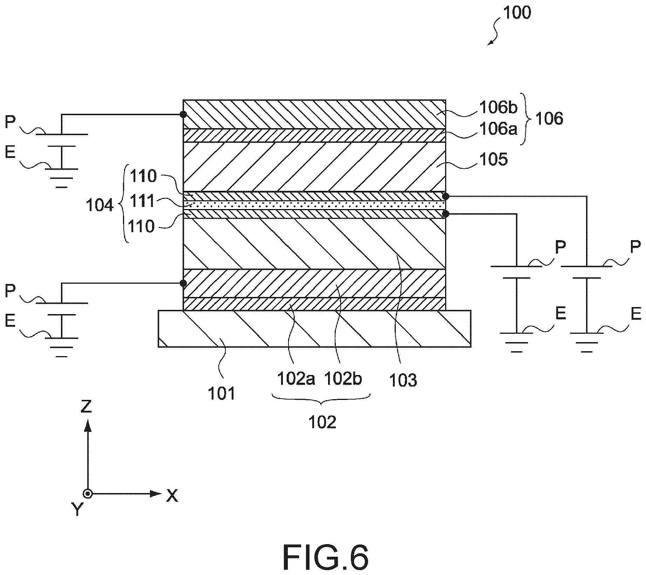

As described above, the optical element 100 includes the first light reflecting layer 102 and the second light reflecting layer 106, and may include a plurality of the first light reflecting layers 102 and a plurality of the second light reflecting layers 106. Fig. 6 is a cross-sectional view of the optical element 100 including a plurality of the first light reflecting layers 102 and a plurality of the second light reflecting layers 106.

As shown in the same figure, the first light reflecting layer 102 includes a first layer 102a and a second layer 102b. The first layer 102a is arranged on the substrate 101, and the second layer 102b is arranged on the first layer 102a.

Each of the first layer 102a and the second layer 102b may be formed of any of the materials listed as the materials of the first light reflecting layer 102 and may be different from each other.

In addition, the second light reflecting layer 106 includes a first layer 106a and a second layer 106b. The first layer 106a is arranged on the second dielectric thick film layer 105, and the second layer 106b is arranged on the first layer 106a.

Each of the first layer 106a and the second layer 106b may be formed of any of the materials listed as the materials of the second light reflecting layer 106 and may be different from each other.

Since the materials of the first light reflecting layer 102 and the second light reflecting layer 106 affect the wavelength of the modulated light emitted from the optical element 100, the materials that can be utilized according to the wavelength of the target modulated light are limited. Therefore, there may be a case where the material of the first light reflecting layer 102 is a material having a small adhesion to the substrate 101 or the material of the second light reflecting layer 106 is a material having a small adhesion to the second light reflecting layer 106.

In contrast, by making the first light reflecting layer 102 and the second light reflecting layer 106 to be two layers, the first layer 102a may be used as an adhesive layer to the substrate 101, and the first layer 106a may be used as an adhesive layer to the second dielectric thick film layer 105. Thus, it becomes possible to select the materials of the second layer 102b and the second layer 106b depending on the optical characteristics without considering adhesion characteristics.

Note that any one of the first light reflecting layer 102 or the second light reflecting layer 106 may be two layers, and the other may be one layer.

Furthermore, at least one of the first light reflecting layer 102 or the second light reflecting layer 106 functions as the electrode for applying the potential difference to the transparent conductor thin film 110, but the other may not function as the electrode. Therefore, it is also possible to one of the first light reflecting layer 102 or the second light reflecting layer 106 to be an insulating light reflecting layer.

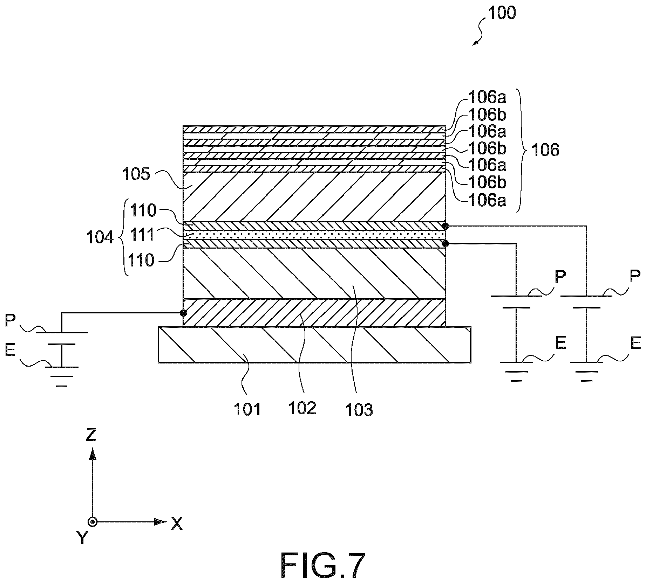

Fig. 7 is a cross-sectional view showing the optical element 100 including the second light reflecting layer 106 which is a dielectric multilayer film. As shown in the same figure, the second light reflecting layer 106 is formed by alternately laminating a plurality of first layers 106a and a plurality of second layers 106b.

The first layer 106a and the second layer 106b are formed of dielectrics having refractive indices different from each other, and selectively transmit or reflect light of the specific wavelength by multiple reflection occurring at the layer interface. Note that the number of layers of the first layer 106a and the second layer 106b is not particularly limited. Furthermore, the dielectric multilayer film may be such that three or more dielectrics having different refractive indices are laminated.

Incidentally, in a case where any one of the first light reflecting layer 102 or the second light reflecting layer 106 is the dielectric multilayer film and the optical element 100 is a reflective type dimming element, the second light reflecting layer 106 is desirably the dielectric multilayer film. Furthermore, in a case where the optical element 100 is a transmissive type dimming element, one of the first light reflecting layer 102 or the second light reflecting layer 106 may be the dielectric multilayer film.

### [Fermi Level Adjustment]

Although the optical element 100 controls a charge concentration of the transparent conductor thin film 110 to change the optical characteristics by applying the potential difference to the transparent conductor thin film 110, the optical characteristics may be changed by a method other than the application of the potential difference.

The transparent conductor thin film 110 may be any film capable of controlling the optical transition energy by adjusting the Fermi level, for example, and it is also possible to control the charge concentration of the transparent conductor thin film 110 by an external field such as light to change the optical characteristics.

### [Electronic Apparatus]

Although the optical element 100 according to the present embodiment can be used as the light modulation element for controlling light absorption in a specific wavelength range as described above, various types of electronic apparatuses can be realized by using the structure of the optical element 100.

For example, the optical element 100 is capable of realizing a reflective light type display or a wavelength selective mirror that controls an amount of the reflected light in the specific wavelength range. Furthermore, the optical element 100 is capable of realizing a wavelength selective filter or a transmissive light type display for controlling an amount of transmitted light in the specific wavelength range.

Furthermore, the optical element 100 is capable of realizing a light detecting element that allows light detection of the specific wavelength range. A target light modulation range or light detection band in the electronic apparatus can optionally determine a modulation wavelength, a detection wavelength, and a half width between a visible light range and an infrared light range (500-2500 nm) by a material selection and a structural design in each layer structure.

### (Second Embodiment)

An optical element according to a second embodiment of the present technology will be described. Since the structure of the optical element according to the second embodiment is common to that of the optical element according to the first embodiment, the same reference numerals as those of the first embodiment are given in the second embodiment.

### [Structure of Optical Element]

Fig. 1 is a cross-sectional view showing a structure of the optical element 100 according to the second embodiment of the present technology, and Fig. 2 is a plan view of the optical element 100. Note that, in the following drawings, three mutually orthogonal directions are referred to as the X direction, the Y direction, and the Z direction, respectively.

The optical element 100 has the Fabry-Perot structure, and is the light modulation element for modulating the incident light. The optical element 100 may be the transmissive type light modulation element that transmits the incident light, or may be the reflective type light modulation element that reflects the incident light.

As shown in Figs. 1 and 2, the optical element 100 includes the substrate 101, the first light reflecting layer 102, the first dielectric thick film layer 103, the multilayer film laminate 104, the second dielectric thick film layer 105, the second light reflecting layer 106, and the electrodes 107.

The substrate 101 supports each layer of the optical element 100. The substrate 101 has the light transparency, has desirably a smooth surface, and desirably includes quartz, sapphire, SiO₂, CaF₂, germanium, silicon, ZnSe, ZnS, MgF₂, NaCl, KCl or chalcogenide glass or the like.

Examples of the chalcogenide glass of the substrate 101 include a compound represented by, for example, a composition formula of L_{X}M_{Y}N_{z} (0 ≤ X ≤ 1), (0 ≤ Y ≤ 1), (0 ≤ Z ≤ 1). For example, L is Si, Ge, P, As, Sb, Al, Ga, In, Tl, Pb, Zn and the like, M is Si, Ge, P, As, Sb, Al, Ga, In, Tl, Pb, Zn and the like, and N is O, S, Se, Te and the like.

The first light reflecting layer 102 is arranged on the substrate 101, and reflects a portion or all of the light incident from the first dielectric thick film layer 103 side on the first dielectric thick film layer 103 side.

The material of the first light reflecting layer 102 can be arbitrarily selected depending on the wavelength of the target modulated light, and can include, for example, Au, Ag, Cu, Al, Pt, Cr, Ti, Pd, ITO (Indium Tin Oxide), IGZO (Indium Gallium Zinc Oxide), graphite, or graphene.

The thickness of the first light reflecting layer 102 can be determined from a range of 0.5 nm or more and 100 nm or less depending on the wavelength of the target absorption wavelength.

The first dielectric thick film layer 103 is arranged on the first light reflecting layer 102 to electrically shield the multilayer film laminate 104 and the first light reflecting layer 102.

The first dielectric thick film layer 103 is formed of the solid dielectric. Specifically, examples of the material of the first dielectric thick film layer 103 include oxide dielectrics (Al₂O₃, HfO₂, SiO₂, La₂O₃, SiO₂, STO, Ta₂O₅, TiO₂ and ZnO, etc.), nitride dielectrics (SiN and BN, etc.), and other ferroelectrics (BiFeO₃, BaTiO₃, PbZrO₃, PbTiO₃, PbZrTiO₃, and SrBi₂Ta₂O₉, etc.).

In addition, examples of the material of the first thick film layer 103 include layered materials (such as TiₓO₂ (0 < x ≤ 1), Ti_{0.8}Co_{0.2}O₂, Ti_{0.6}Fe_{0.4}O₂, Ti_{(5.2-2x)/6}Mn_{x/2}O₂ (0 ≤ x ≤ 0.4), Ti_{0.8-x/4}Fe_{x/2}Co_{0.2-x/4}O₂ (0 ≤ x ≤ 0.8), MnO₂, Mn₃O₇, Nb₃O₈, Nb₆O₁₇, TiNbO₅, Ti₂NbO₇, Ti₅NbO₁₄, TaO₃, LaNb₂O₇, Ca₂Nb₃O₁₀, Sr₂Nb₃O₁₀, Ca₂Nb₃O₁₀, Ca₂Ta₃O₁₀, Sr₂Ta₃O₁₀ and SrBi₄Ti₄O₁₅).

In addition, examples of the material of the first dielectric film layer 103 include Si, Ge, fluorides (CaF₂, MgF₂, BaF₂, etc.), NaCl, KBr, ZnS, ZnSe, GeS, GeSbS, diamond, carbon nitride (CN_{X}), silicon nitride, or atomic layer thin film.

Furthermore, examples of the material of the first dielectric thick film layer 103 include chalcogenide glass. The chalcogenide glass includes a compound represented by, for example, a composition formula L_{X}M_{Y}N_{z} (0 ≤ X ≤ 1), (0 ≤ Y ≤ 1), and (0 ≤ Z ≤ 1) . For example, L is Si, Ge, P, As, Sb, Al, Ga, In, Tl, Pb, Zn and the like, M is Si, Ge, P, As, Sb, Al, Ga, In, Tl, Pb, Zn and the like, and N is O, S, Se, Te and the like.

Furthermore, examples of the material of the first dielectric thick film layer 103 include a layered compound formed of any one element of C, Si, Ge, Sb, and P.

Furthermore, examples of the material of the first dielectric thick film layer 103 include a layered compound represented by a composition formula of MX₂. M is any of Ti, Zr, Hf, V, Nb, Ta, Mo, W, Sc, Mn, Fe, Ni, Cr, Pd, Pt, Re, Ga, Ge, Sn, is any of Pb and In, X is O, S, Se and Te.

Furthermore, examples of the material of the first dielectric thick film layer 103 include a layered compound represented by a composition formula of MX. M is Ga or In, and X is any of O, S, Se, and Te. Examples of the material of the first dielectric thick film layer 103 include a layered compound represented by a composition formula of M₂X₃. M is Bi and X is any of O, S, Se and Te.

Furthermore, examples of the material of the first dielectric film layer 103 include a layered compound represented by a composition formula of L_{X}M_{1-X}A_{Y}B_{1-Y} (0 ≤ X ≤ 1), and (0 ≤ Y ≤ 1). L is any of Ti, Zr, Hf, V, Nb, Ta, Mo, W, Sc, Mn, Fe, Ni, Cr, Pd, Pt, Re, Ga, Ge, Sn, Pb and In, and M is any of Ti, Zr, Hf, V, Nb, Ta, Mo, W, Sc, Mn, Fe, Ni, Cr, Pd, Pt, Re, Ga, Ge, Sn, Pb, and In. A is any of N, O, P, S, Se, and Te, and B is any of N, O, P, S, Se, and Te.

The thickness of the first dielectric thick film layer 103 can be determined depending on a target absorption wavelength from a range of 100 nm or more and 3000 nm or less.

The multilayer film laminate 104 is arranged on the first dielectric thick film layer 103, and is formed by alternately laminating the transparent conductor thin film 110 and the dielectric thin film 111.

As shown in Fig. 1, the multilayer film laminate 104 may include the two layers of the transparent conductor thin films 110 and one layer of the dielectric thin film 111 arranged therebetween. In addition, as described later, the multilayer film laminate 104 may include a larger number of the transparent conductor thin films 110 and a plurality of the dielectric thin films 111 arranged therebetween.

The transparent conductor thin film 110 is a conductive thin film having the light transparency that is capable of controlling the optical transition energy by the Fermi level adjustment, in other words, that has the optical characteristics being changed by adjusting the carrier concentration.

Specifically, the transparent conductor thin film 110 may be a graphene thin film, a carbon thin film, a carbon nanotube thin film, a conductive atomic layer thin film having metallic characteristics, semimetallic characteristics, or a narrow band gap (hereinafter, conductor atomic layer thin film), or a conductive thin film capable of trapping a carrier for forming an impurity level within a band gap of 3 eV or more and 4 eV or less.

Examples of a material of the conductor atomic layer thin film include a layered compound formed of any one element of C, Si, Ge, Sb, and P.

In addition, examples of the material of the conductive atomic layer thin film include a layered compound represented by a composition formula of MX₂. M is any of Ti, Zr, Hf, V, Nb, Ta, Mo, W, Sc, Mn, Fe, Ni, Cr, Pd, Pt, Re, Ga, Ge, Sn, Pb, and In, and X is any of O, S, Se and Te.

In addition, examples of the material of the conductor atomic layer thin film include a layered compound represented by a composition formula of MX. M is Ga or In, and X is any of O, S, Se, and Te. In addition, examples of the material of the conductive atomic layer thin film include a layered compound represented by a composition formula of M₂X₃. M is Bi, and X is any of O, S, Se and Te.

Furthermore, examples of the material of the conductive atomic layer thin film include a layered compound represented by a composition formula of LₓM_{1-X}A_{Y}B_{1-Y} (0 < X < 1) and (0 ≤ Y ≤ 1). L is any of Ti, Zr, Hf, V, Nb, Ta, Mo, W, Sc, Mn, Fe, Ni, Cr, Pd, Pt, Re, Ga, Ge, Sn, Pb, and In, and M is any of Ti, Zr, Hf, V, Nb, Ta, Mo, W, Sc, Mn, Fe, Ni, Cr, Pd, Pt, Re, Ga, Ge, Sn, Pb, and In. A is any of N, O, P, S, Se, and Te, and B is any of N, O, P, S, Se, and Te.

Furthermore, examples of a material of the conductive thin film capable of trapping the carrier for forming the impurity level within the band gap of 3 eV or more and 4 eV or less include an oxide represented by a composition formula of L_{X}M_{Y}O (0 ≤ X ≤ 1, 0 ≤ Y ≤ 1). L is any of Sb, F, As, Nb, Ta, Sn, Ge, Ti, Zr, Hf, W, Te, Al, Ga, B, In, Y, Sc, V, Si, and M is any of Sb, F, As, Nb, Ta, Sn, Ge, Mo, Ti, Zr, Hf, W, Te, Al, Ga, B, In, Y, Sc, V, and Si.

Note that a plurality of the transparent conductor thin films 110 forming the multilayer film laminate 104 may be formed of all the same material or may be formed of different materials from each other.

In a case where the transparent conductor thin film 110 is the atomic layer thin film, a thickness of the transparent conductor thin film 110 is desirably a thickness of one atomic layer or two atomic layers. In addition, in a case where the transparent conductor thin film 110 is not the atomic layer thin film, the thickness is conforming to the thickness of one atomic layer or two atomic layers, that is, desirably 0.1 nm or more and 5 nm or less.

A plurality of the transparent conductor thin films 110 forming the multilayer film laminate 104 may all have the same thickness, or may have different thicknesses from each other.

The dielectric thin film 111 is the atomic layer thin film arranged between the transparent conductive thin films 110 to electrically shield between the transparent conductive thin films 110.

The dielectric thin film 111 is the atomic layer thin film formed of a dielectric (hereinafter, dielectric atomic layer thin film) or a semiconductor, and is the atomic layer thin film having a band gap of 1 meV or more (hereinafter, semiconductor atomic layer thin film).

A specific example of a material of the dielectric atomic layer thin film is hexagonal boron nitride (h-BN).

In addition, examples of the material of the dielectric atomic layer thin film include a layered compound represented by a composition formula of MX₂. M is any of Ti, Zr, Hf, V, Nb, Ta, Mo, W, Sc, Mn, Fe, Ni, Cr, Pd, Pt, Re, Ga, Ge, Sn, Pb and In, and X is any of O, S, Se and Te.

Furthermore, examples of the material of the dielectric thin film 111 include a layered compound called mica represented by a composition formula of X₂Y_{4~6}Z₈O₂₀A₄. X is any of K, Na, Ca, Ba, Rb and Cs, Y is any of Al, Mg, Fe, Mn, Cr, Ti and Li. Z is any of Si, Al, Fe and Ti, and A is OH or F.

Furthermore, examples of the material of the dielectric thin film 111 include an oxide electric (such as Al₂O₃, HfO₂, SiO₂, La₂O₃, SiO₂, ZrO₂, SrTiO₃, Ta₂O₅, Ti_{0.87}O₂, Ti_{0.91}O₂, Ti₄O₉, Ti₄O₁₁, TiO₂, ZnO, RuO₂, MnO₂, LaAlO₃ and Nb₂O₃), a nitride electric (such as SiN and BN), a sulfide electric (such as VS₂), or other ferroelectric (such as BiFeO₃, BaTiO₃, SiTiO₃, PbZrO₃, PbTiO₃, PbZrTiO₃, SrBi₂Ta₂O₉ and Ba₁₋ₓSrₓTiO (such as 0 ≤ x ≤ 1)).

Furthermore, examples of the material of the dielectric thin film 111 include a layered oxide (TiₓO₂ (0 < x ≤ 1), Ti_{0.3}Co_{0.2}O₂, Ti_{0.6}Fe_{0.4}O₂, Ti_{(5.2-2x)/6}Mn_{x/2}O₂ (0 ≤ x ≤ 0.4), Ti_{0.8-x/4}Fe_{x/2}Co_{0.2-x/4}O₂ (0 ≤ x ≤ 0.8), MnO₂, Mn₃O₇, Nb₃O₈, NbₑO₁₇, TiNbO₅, Ti₂NbO₇, Ti₃NbO₁₄, TaO₃, LaNb₂O₇, Ca₂Nb₃O₁₀, Sr₂Nb₃O₁₀, Ca₂Nb₃O₁₀, Ca₂Ta₃O₁₀, Sr₂Ta₃O_{10,} SrBi₄Ti₄O₁₅ and Ca₂Naₘ₋₃NbₘO₃ₘ₊₁ (m = 3 to 6)).

Furthermore, examples of the material of the dielectric thin film 111 include a layered compound formed of any one element of Si, Ge, Sb, and P.

A thickness of the dielectric thin film 111 is desirably 10 nm or less in order to suppress the optical path length difference between the transparent conductor thin films 110.

Incidentally, although the material of the transparent conductor thin film 110 and the material of the dielectric thin film 111 described above are overlapped, in one optical element 100, the dielectric thin film 111 may be formed of a material having a band gap larger than that of the material of the transparent conductor thin film 110.

The second dielectric thick film layer 105 is arranged on the multilayer film laminate 104 to electrically shield the multilayer film laminate 104 and the second light reflecting layer 106.

The second dielectric thick film layer 105 is formed of the solid dielectric, specifically may be formed of any of the materials of the first dielectric thick film layer 103 described above. The material of the second dielectric thick film layer 105 may be the same as or different from the materials of the first dielectric thick film layer 103.

The thickness of the second dielectric thick film layer 105 can be determined depending on a target absorption wavelength from a range of 10 nm or more and 350 nm or less. The thickness of the second dielectric thick film layer 105 may be the same as the thickness of the first dielectric thick film layer 103 or may be different.

The second light reflecting layer 106 is arranged on the second dielectric thick film layer 105 and transmits light incident from a side opposite to the second dielectric thick film layer 105 (in Fig. 1, above). In addition, the second light reflecting layer 106 reflects a portion or all of the light incident from a second dielectric thick film layer 105 side to the second dielectric thick film layer 105 side.

The material of the second light reflecting layer 106 can be arbitrarily selected according to the wavelength of the target modulated light, and can be formed of any of the materials of the first light reflecting layer 102 described above. The material of the second light reflecting layer 106 may be the same as or different from the material of the first light reflecting layer 102.

The thickness of the second light reflecting layer 106 can be determined depending on the wavelength of the target modulated light from a range of 0.5 nm or more and 100 nm or less.

Each electrode 107 is connected to the transparent conductor thin film 110 as shown in Fig. 2. The electrode 107 is arranged on the first dielectric thick film layer 103 in the vicinity of an end of the transparent conductor thin film 110 and is coated with the second dielectric thick film layer 105. The electrode 107 is formed of any conductive material such as Au.

### [Electrical Connection]

As shown in Fig. 1, the first light reflecting layer 102, the second light reflecting layer 106, and the transparent conductor thin film 110 are respectively connected to a power source P, and the power source P is connected to a ground E.

Thus, the optical element 100 is configured to be capable of applying the predetermined potential difference between the first light reflecting layer 102 and the second light reflecting layer 106 and each transparent conductor thin film 110.

Note that the optical element 100 may be configured to apply the predetermined potential difference between the first light reflecting layer 102 and the second light reflecting layer 106 and the transparent conductor thin film 110 or between each transparent conductor thin film 110, and all of the first light reflecting layer 102, the second light reflecting layer 106, and the transparent conductor thin film 110 may not be connected to the power supply P and the ground E.

For example, the first light reflecting layer 102 and the second light reflecting layer 106 may be connected to the ground, and the transparent conductor thin film 110 may be connected to the power source that produces the predetermined potential difference with respect to the ground. Also, the transparent conductor thin film 110 may be connected to the ground, and the first light reflecting layer 102 and the second light reflecting layer 106 may be connected to the power source that produces the predetermined potential difference with respect to the ground. Alternatively, each layer may constitute a floating electrode instead of being connected to the ground.

Furthermore, the optical element 100 may be configured to be capable of applying the predetermined potential difference between any one of the first light reflecting layer 102 or the second light reflecting layer 106 and the transparent conductor thin film 110.

For example, in a case where the predetermined potential difference is applied between the first light reflecting layer 102 and the transparent conductor thin film 110, the first light reflecting layer 102 and the transparent conductor thin film 110 are connected to the power source or the ground, or are the floating electrodes functioning as the electrodes. On the other hand, since the second light reflecting layer 106 is not used as the electrode and may be an insulator.

Similarly, in a case where the predetermined potential difference is applied between the second light reflecting layer 106 and the transparent conductor thin film 110, the second light reflecting layer 106 and the transparent conductor thin film 110 are connected to the power source or the ground, or are floating electrodes functioning as the electrodes. On the other hand, since the first light reflecting layer 102 is not used as the electrode, it may be the insulator.

Furthermore, in a case where the optical element 100 applies the predetermined potential difference between each transparent conductor thin film 110, each transparent conductor thin film 110 is connected to the power source P or the ground E, or is a floating electrode functioning as the electrode. On the other hand, in this case, since the first light reflecting layer 102 and the second light reflecting layer 106 are not used as the electrodes, they may be the insulators.

The optical element 100 according to the second embodiment has the configuration described above. Although there is no particular limitation on a method of producing the optical element 100, it is possible to produce by, for example, the production method described in Non-Patent Literature 2.

### [Operation of Optical Element]

Next, an operation of the optical element 100 will be described.

When light is incident on the optical element 100 from a second light reflecting layer 106 side (in Fig. 1, above), the light is transmitted through the second light reflecting layer 106, the second dielectric thick film layer 105, the multilayer film laminate 104, and the first dielectric thick film layer 103, and reaches the first light reflecting layer 102.

The light is reflected by the first light reflecting layer 102, is transmitted through the first dielectric thick film layer 103, the multilayer film laminate 104, and the second dielectric thick film layer 105, and is reflected by the second light reflecting layer 106. Thereafter, the light is repeatedly reflected and interfered by the first light reflecting layer 102 and the second light reflecting layer 106, and generates the resonance (Fabry-Perot resonance).

In a case where the optical element 100 is the reflective type light modulation element, the second light reflecting layer 106 is configured to reflect a portion of the light and transmit a portion thereof. Therefore, the light is transmitted through the second light reflecting layer 106, and is emitted from the optical element 100.

Furthermore, in a case where the optical element 100 is the transmissive type light modulation element, the first light reflecting layer 102 is configured to reflect a portion of the light and transmits a portion thereof. Therefore, the light is transmitted through the first light reflecting layer 102 and the substrate 101, and is emitted from the optical element 100.

Here, the light causes interference by multiple scattering occurring at the layer interface of each layer, and components of the specific wavelength are selectively absorbed (resonantly absorbed). Fig. 3 is an example of the reflected light spectrum of the optical element 100. As shown by the solid line in the same figure, in the case of the reflective type light modulation element, the reflectance decreases at the specific wavelength. Note that it is also possible to increase the reflectance at the specific wavelength by changing the film thicknesses of the first light reflecting layer 102 and the second light reflecting layer 106.

This specific wavelength (hereinafter, absorption wavelength) λ is determined by kinds of the materials and an interlayer distance between the second light reflecting layer 106 and the first light reflecting layer 102. If the kinds of the materials of the second dielectric thick film layer 105 and the first dielectric thick film layer 103 are the same (refractive index: n), the interlayer distance h between the second light reflecting layer 106 and the first light reflecting layer 102 can be roughly estimated as λ/4n.

Furthermore, the transparent conductor thin film 110 of the multilayer film laminate 104 is the thin film capable of controlling the optical transition energy by the Fermi level adjustment as described above. Therefore, it is possible to change the optical characteristics by applying the potential difference to the transparent conductor thin film 110 and, adjusting the carrier concentration.

Fig. 3 shows the reflectance of the optical element 100 in a case where the predetermined charge is injected into the transparent conductor thin film 110 by the dashed line. As shown in the same figure, by injecting the charges into the transparent conductor thin film 110, it is possible to vary the reflectance in the predetermined wavelength range.

Furthermore, the optical element 100 has a structure in which the dielectric thin film 111 is arranged between the two layers of the transparent conductor thin films 110. By making the transparent conductor thin film 110 to be the two layers, it is possible to increase the light absorption rate in the multilayer film laminate 104 by a factor of two and increase a range of variation (modulation factor) of the resonance absorption rate (see Examples).

Furthermore, by making the dielectric thin film 111 to be the atomic layer thin film, thickening of the multilayer film laminate 104 is suppressed, and in addition, the optical path length between the films of each transparent conductor thin film 110 is reduced, so that a difference in the resonance absorption effect of the transparent conductor thin film 110 at each position is reduced, and broadening of a transmission peak or a reflection peak (see Fig. 3) of the optical element 100 can be suppressed.

As described above, in the optical element 100, the light modulation is possible by applying the potential difference to the transparent conductor thin film 110, and since there is no need to be mechanically driven, it is possible to realize the light modulation element having the high response speed and the high light modulation factor.

### [Multilayer Film Laminate]

In the above description, the multilayer film laminate 104 has one layer of the dielectric thin film 111 arranged between two layers of the transparent conductor thin films 110, but may have a larger number of the transparent conductor thin films 110 and the dielectric thin films 111. Fig. 4 is a cross-sectional view of the optical element 100 including the multilayer film laminate 104, and Fig. 5 is a plan view of the optical element 100.

As shown in the same figures, the multilayer film laminate 104 may have three layers of the transparent conductor thin films 110 and two layers of the dielectric thin films 111 arranged between the respective transparent conductor thin films 110.

By using the three layers of the transparent conductor thin films 110, it is possible to increase the light absorption rate in the transparent conductor thin film 110 by a factor of three and increase the modulation factor of the resonant light absorption rate of the optical element 100 (see Examples).

Furthermore, the multilayer film laminate 104 may have a much larger number of transparent conductor thin films 110 and dielectric thin films 111. For example, the multilayer film laminate 104 may have ten layers or less of the transparent conductor thin films 110 and the dielectric thin films 111 arranged between the transparent conductor thin films 110.

Note that a plurality of the dielectric thin films 111 constituting the multilayer film laminate 104 may all be formed of the same material, or may be formed of different materials from each other.

Furthermore, a plurality of the dielectric thin films 111 constituting the multilayer film laminate 104 may all have the same thickness, or may have different thicknesses from each other.

### [Reflector]

As described above, the optical element 100 includes the first light reflecting layer 102 and the second light reflecting layer 106, and may include a plurality of the first light reflecting layers 102 and a plurality of the second light reflecting layers 106. Fig. 6 is a cross-sectional view of the optical element 100 including a plurality of the first light reflecting layers 102 and a plurality of the second light reflecting layers 106.

As shown in the same figure, the first light reflecting layer 102 includes a first layer 102a and a second layer 102b. The first layer 102a is arranged on the substrate 101, and the second layer 102b is arranged on the first layer 102a.

Each of the first layer 102a and the second layer 102b may be formed of any of the materials listed as the materials of the first light reflecting layer 102 and may be different from each other.

In addition, the second light reflecting layer 106 includes a first layer 106a and a second layer 106b. The first layer 106a is arranged on the second dielectric thick film layer 105, and the second layer 106b is arranged on the first layer 106a.

Each of the first layer 106a and the second layer 106b may be formed of any of the materials listed as the materials of the second light reflecting layer 106 and may be different from each other.

Since the materials of the first light reflecting layer 102 and the second light reflecting layer 106 affect the wavelength of the modulated light emitted from the optical element 100, the materials that can be utilized according to the wavelength of the target modulated light are limited. Therefore, there may be a case where the material of the first light reflecting layer 102 is a material having a small adhesion to the substrate 101 or the material of the second light reflecting layer 106 is a material having a small adhesion to the second light reflecting layer 106.

In contrast, by making the first light reflecting layer 102 and the second light reflecting layer 106 to be two layers, the first layer 102a may be used as an adhesive layer to the substrate 101, and the first layer 106a may be used as an adhesive layer to the second dielectric thick film layer 105. Thus, it becomes possible to select the materials of the second layer 102b and the second layer 106b depending on the optical characteristics without considering the adhesion characteristics.

Note that any one of the first light reflecting layer 102 or the second light reflecting layer 106 may be two layers, and the other may be one layer.

Furthermore, at least one of the first light reflecting layer 102 or the second light reflecting layer 106 functions as the electrode for applying the potential difference to the transparent conductor thin film 110, but the other may not function as the electrode. Therefore, it is also possible to make one of the first light reflecting layer 102 or the second light reflecting layer 106 to be an insulating light reflecting layer.

Fig. 7 is a cross-sectional view showing the optical element 100 including the second light reflecting layer 106 which is a dielectric multilayer film. As shown in the same figure, the second light reflecting layer 106 is formed by alternately laminating a plurality of first layers 106a and a plurality of second layers 106b.

The first layer 106a and the second layer 106b are formed of dielectrics having refractive indices different from each other, and selectively transmit or reflect light of the specific wavelength by multiple reflection occurring at the layer interface. Note that the number of layers of the first layer 106a and the second layer 106b is not particularly limited. Furthermore, the dielectric multilayer film may be such that three or more dielectrics having different refractive indices are laminated.

Incidentally, in a case where any one of the first light reflecting layer 102 or the second light reflecting layer 106 is the dielectric multilayer film and the optical element 100 is the reflective type dimming element, the second light reflecting layer 106 is desirably the dielectric multilayer film. Furthermore, in a case where the optical element 100 is the transmissive type dimming element, one of the first light reflecting layer 102 or the second light reflecting layer 106 may be the dielectric multilayer film.

### [Fermi Level Adjustment]

Although the optical element 100 controls a charge concentration of the transparent conductor thin film 110 to change the optical characteristics by applying the potential difference to the transparent conductor thin film 110, the optical characteristics may be changed by a method other than the application of the potential difference.

The transparent conductor thin film 110 may be any film capable of controlling the optical transition energy by adjusting the Fermi level, for example, and it is also possible to control the charge concentration of the transparent conductor thin film 110 by the external field such as light to change the optical characteristics.

### [Electronic Apparatus]

Although the optical element 100 according to the present embodiment can be used as the light modulation element for controlling light absorption in the specific wavelength range as described above, various types of electronic apparatuses can be realized by using the structure of the optical element 100.

For example, the optical element 100 is capable of realizing the reflective light type display or the wavelength selective mirror that controls the amount of the reflected light in the specific wavelength range. Furthermore, the optical element 100 is capable of realizing the wavelength selective filter or the transmissive light type display for controlling the amount of transmitted light in the specific wavelength range.

Furthermore, the optical element 100 is capable of realizing the light detecting element that allows light detection of the specific wavelength range. The target light modulation range or light detection band in the electronic apparatus can optionally determine the modulation wavelength, the detection wavelength, and the half width between the near infrared light range and the far infrared light range (1000 to 20000 nm) by the material selection and the structural design in each layer structure.

### Example

Optical elements according to Examples and Comparative Examples were produced as follows.

### [Example 1]

The optical element having the configuration shown in Fig. 1 described in the first embodiment was produced and used as Example 1.

The first light reflecting layer was formed of Au, and had a thickness of 700 Å. The first dielectric thick film layer 103 was formed of hafnium oxide and had a thickness of 1600 Å.

The multilayer film laminate was a heterostructure in which the transparent conductor thin film formed of graphene, the dielectric thin film formed of hexagonal boron nitride, and the transparent conductor thin film formed of graphene were laminated in the order. In each transparent conductor thin film, graphene is a single atomic layer and a thickness is 0.335 nm. In the dielectric thin film, hexagonal boron nitride is a three-layered atomic layer and a thickness is 1 nm.

The second dielectric thick film layer was formed of hafnium oxide and had a thickness of 1600 Å. The second light reflecting layer 106 was formed of Au and had a thickness of 378 Å.

### [Example 2]

The optical element having the configuration shown in Fig. 4 described in the first embodiment was produced as Example 2. The configuration except for the multilayer film laminate is the same as that of Example 1.

The multilayer film laminate was the heterostructure in which the transparent conductor thin film formed of graphene and the dielectric thin film formed of hexagonal boron nitride were laminated in the order of the transparent conductor thin film, the dielectric thin film, the transparent conductor thin film, the dielectric thin film, and the transparent conductor thin film. In each transparent conductor thin film, graphene is the single atomic layer and a thickness is 0.335 nm. In each dielectric thin film, hexagonal boron nitride is the three-layered atomic layer and a thickness is 1 nm.

### [Comparative Example]

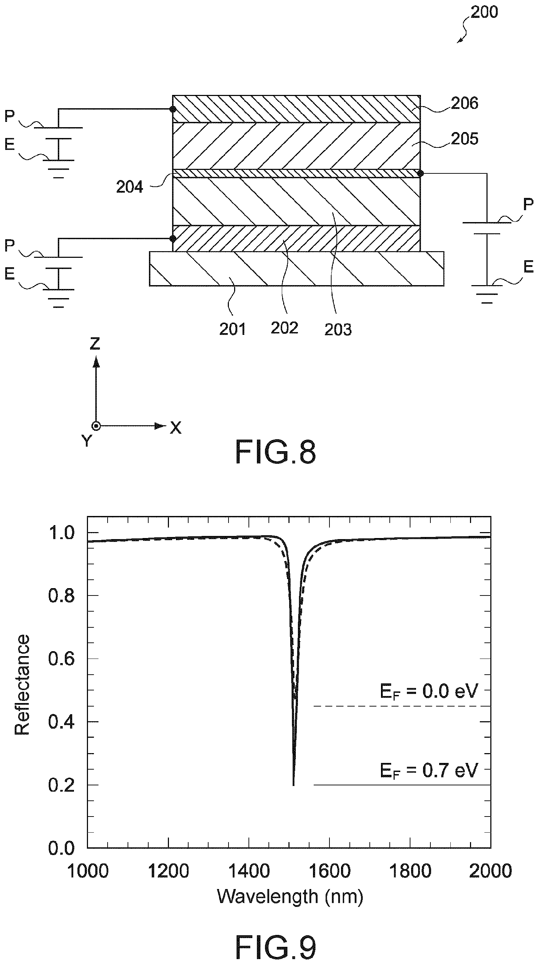

Fig. 8 is a cross-sectional view of an optical element 200 according to Comparative Example. As shown in the same figure, the optical element 200 includes a substrate 201, a first light reflecting layer 202, a first dielectric thick film layer 203, a transparent conductor thin film 204, a second dielectric thick film layer 205, and a second light reflecting layer 206.

In the optical element 200, the multilayer film laminate 104 of the optical element 100 is replaced with a single-layered transparent conductor thin film, and each layer other than the transparent conductor thin film has the same configuration as each layer of the optical element 100 according to Example 1. The transparent conductor thin film was formed of graphene being the single atomic layer and had a thickness of 0.335 nm.

### [Example 3]

The optical element having the configuration shown in Fig. 4 described in the second embodiment was produced as Example 3. The first light reflecting layer was formed of Au and had a thickness of 1000 Å. The first dielectric thick film layer 103 was formed of zinc sulfide and had a thickness of 10000 Å.

The multilayer film laminate was the heterostructure in which the transparent conductor thin film formed of graphene and the dielectric thin film formed of hexagonal boron nitride were laminated in the order of the transparent conductor thin film, the dielectric thin film, the transparent conductor thin film, the dielectric thin film, and the transparent conductor thin film. In each transparent conductor thin film, graphene is the single atomic layer and a thickness is 0.335 nm. Hexagonal boron nitride in each dielectric thin film is a 30-lyaer atomic layer and a thickness is 10 nm.

The second dielectric thick film layer was formed of zinc sulfide and had a thickness of 10000 Å. The second light reflecting layer 10 was formed of Au and had a thickness of 35 Å.

### [Comparative Example]

Fig. 8 is the cross-sectional view of the optical element 200 according to Comparative Example. As shown in the same figure, the optical element 200 includes the substrate 201, the first light reflecting layer 202, the first dielectric thick film layer 203, the transparent conductor thin film 204, the second dielectric thick film layer 205, and the second light reflecting layer 206.

In the optical element 200, the multilayer film laminate 104 of the optical element 100 is replaced with the single-layered transparent conductor thin film, and each layer other than the transparent conductor thin film has the same configuration as each layer of the optical element 100 according to Example 3. The transparent conductor thin film was formed of graphene being the single atomic layer and had a thickness of 0.335 nm.

### [Example 4]

The optical element having the configuration shown in Fig. 4 described in the second embodiment was produced as Example 4. The first light reflecting layer was formed of Au and had a thickness of 1000 Å. The first dielectric thick film layer 103 was formed of zinc sulfide and had a thickness of 11250 Å.

The multilayer film laminate was the heterostructure in which the transparent conductor thin film formed of graphene and the dielectric thin film formed of hexagonal boron nitride were laminated in the order of the transparent conductor thin film, the dielectric thin film, the transparent conductor thin film, the dielectric thin film, and the transparent conductor thin film. In each transparent conductor thin film, graphene is the single atomic layer and a thickness is 0.335 nm. Hexagonal boron nitride in each dielectric thin film is a 30-layered atomic layer and a thickness is 10 nm.

The second dielectric thick film layer was formed of zinc sulfide and had a thickness of 11250 Å. The second light reflecting layer 106 was formed of Au and had a thickness of 40Å.

### [Comparative Example]

Fig. 8 is the cross-sectional view of the optical element 200 according to Comparative Example. As shown in the same figure, the optical element 200 includes the substrate 201, the first light reflecting layer 202, the first dielectric thick film layer 203, the transparent conductor thin film 204, the second dielectric thick film layer 205, and the second light reflecting layer 206.

In the optical element 200, the multilayer film laminate 104 of the optical element 100 is replaced with the single-layered transparent conductor thin film, and each layer other than the transparent conductor thin film has the same configuration as each layer of the optical element 100 according to Example 4. The transparent conductor thin film was formed of graphene being the single atomic layer and had a thickness of 0.335 nm.

### [Example 5]

The optical element having the configuration shown in Fig. 4 described in the second embodiment was produced as Example 5. The first light reflecting layer was formed of Au and had a thickness of 1000 Å. The first dielectric thick film layer 103 was formed of germanium and had a thickness of 5600 Å.

The multilayer film laminate was the heterostructure in which the transparent conductor thin film formed of graphene and the dielectric thin film formed of hexagonal boron nitride were laminated in the order of the transparent conductor thin film, the dielectric thin film, the transparent conductor thin film, the dielectric thin film, and the transparent conductor thin film. In each transparent conductor thin film, graphene is the single atomic layer and a thickness is 0.335 nm. In each dielectric thin film, hexagonal boron nitride is the atomic layer of about 30 layers and a thickness is 10 nm.

The second dielectric thick film layer was formed of germanium and had a thickness of 5600 Å. The second light reflecting layer 106 was formed of Au and had a thickness of 50Å.

### [Comparative Example]

Fig. 8 is the cross-sectional view of the optical element 200 according to Comparative Example. As shown in the same figure, the optical element 200 includes the substrate 201, the first light reflecting layer 202, the first dielectric thick film layer 203, the transparent conductor thin film 204, the second dielectric thick film layer 205, and the second light reflecting layer 206.

In the optical element 200, the multilayer film laminate 104 of the optical element 100 is replaced with the single-layered transparent conductor thin film, and each layer other than the transparent conductor thin film has the same configuration as each layer of the optical element 100 according to Example 5. The transparent conductor thin film was formed of graphene being the single atomic layer and had a thickness of 0.335 nm.

### [Example 6]

The optical element having the configuration shown in Fig. 4 described in the second embodiment was produced as Example 6. The first light reflecting layer was formed of Au and had a thickness of 1000 Å. The first dielectric thick film layer 103 was formed of germanium and had a thickness of 6300 Å.

The multilayer film laminate was the heterostructure in which the transparent conductor thin film formed of graphene and the dielectric thin film formed of hexagonal boron nitride were laminated in the order of the transparent conductor thin film, the dielectric thin film, the transparent conductor thin film, the dielectric thin film, and the transparent conductor thin film. In each transparent conductor thin film, graphene is the single atomic layer and a thickness is 0.335 nm. In each dielectric thin film, hexagonal boron nitride is the atomic layer of about 30 layers, the thickness is 10 nm.

The second dielectric thick film layer was formed of germanium and had a thickness of 6300 Å. The second light reflecting layer 106 was formed of Au and had a thickness of 50Å.

### [Comparative Example]

Fig. 8 is the cross-sectional view of the optical element 200 according to Comparative Example. As shown in the same figure, the optical element 200 includes the substrate 201, the first light reflecting layer 202, the first dielectric thick film layer 203, the transparent conductor thin film 204, the second dielectric thick film layer 205, and the second light reflecting layer 206.

In the optical element 200, the multilayer film laminate 104 of the optical element 100 is replaced with the single-layered transparent conductor thin film, and each layer other than the transparent conductor thin film has the same configuration as each layer of the optical element 100 according to Example 6. The transparent conductor thin film was formed of graphene being the single atomic layer and had a thickness of 0.335 nm.

### [Example 7]

The optical element having the configuration shown in Fig. 4 described in the second embodiment was produced as Example 6. The first light reflecting layer was formed of Au and had a thickness of 1000 Å. The first dielectric thick film layer 103 was formed of potassium bromide and had a thickness of 15550 Å.

The multilayer film laminate was the heterostructure in which the transparent conductor thin film formed of graphene and the dielectric thin film formed of hexagonal boron nitride were laminated in the order of the transparent conductor thin film, the dielectric thin film, the transparent conductor thin film, the dielectric thin film, and the transparent conductor thin film. In each transparent conductor thin film, graphene is the single atomic layer and a thickness is 0.335 nm. In each dielectric thin film, hexagonal boron nitride is the three-layered atomic layer and a thickness is 1 nm.

The second dielectric thick film layer was formed of potassium bromide and had a thickness of 15550 Å. The second light reflecting layer 106 was formed of Au and had a thickness of 15 Å.

### [Comparative Example]

Fig. 8 is the cross-sectional view of the optical element 200 according to Comparative Example. As shown in the same figure, the optical element 200 includes the substrate 201, the first light reflecting layer 202, the first dielectric thick film layer 203, the transparent conductor thin film 204, the second dielectric thick film layer 205, and the second light reflecting layer 206.

In the optical element 200, the multilayer film laminate 104 of the optical element 100 is replaced with the single-layered transparent conductor thin film, and each layer other than the transparent conductor thin film has the same configuration as each layer of the optical element 100 according to Example 7. The transparent conductor thin film was formed of graphene being the single atomic layer and had a thickness of 0.335 nm.

### [Example 8]

The optical element having the configuration shown in Fig. 4 described in the second embodiment was produced as Example 8. The first light reflecting layer was formed of Au and had a thickness of 1000 Å. The first dielectric thick film layer 103 was formed of potassium bromide and had a thickness of 17500 Å.

The multilayer film laminate was the heterostructure in which the transparent conductor thin film formed of graphene and the dielectric thin film formed of hexagonal boron nitride were laminated in the order of the transparent conductor thin film, the dielectric thin film, the transparent conductor thin film, the dielectric thin film, and the transparent conductor thin film. In each transparent conductor thin film, graphene is the single atomic layer and a thickness is 0.335 nm. In each dielectric thin film, hexagonal boron nitride is the three-layered atomic layer and a thickness is 1 nm.

The second dielectric thick film layer was formed of potassium bromide and had a thickness of 17500 Å. The second light reflecting layer 106 was formed of Au and had a thickness of 15 Å.

### [Comparative Example]

Fig. 8 is the cross-sectional view of the optical element 200 according to Comparative Example. As shown in the same figure, the optical element 200 includes the substrate 201, the first light reflecting layer 202, the first dielectric thick film layer 203, the transparent conductor thin film 204, the second dielectric thick film layer 205, and the second light reflecting layer 206.

In the optical element 200, the multilayer film laminate 104 of the optical element 100 is replaced with the single-layered transparent conductor thin film, and each layer other than the transparent conductor thin film has the same configuration as each layer of the optical element 100 according to the eighth embodiment. The transparent conductor thin film was formed of graphene being the single atomic layer and had a thickness of 0.335 nm.

### [Light modulation measurement]

For each optical apparatus according to Examples and Comparative Examples above, a spectral modulation of the reflected light was measured by microscopic FT-IR (Fourier transform infrared spectroscopy). For the measurement, Vertex 80 (Bruker Co. was used.

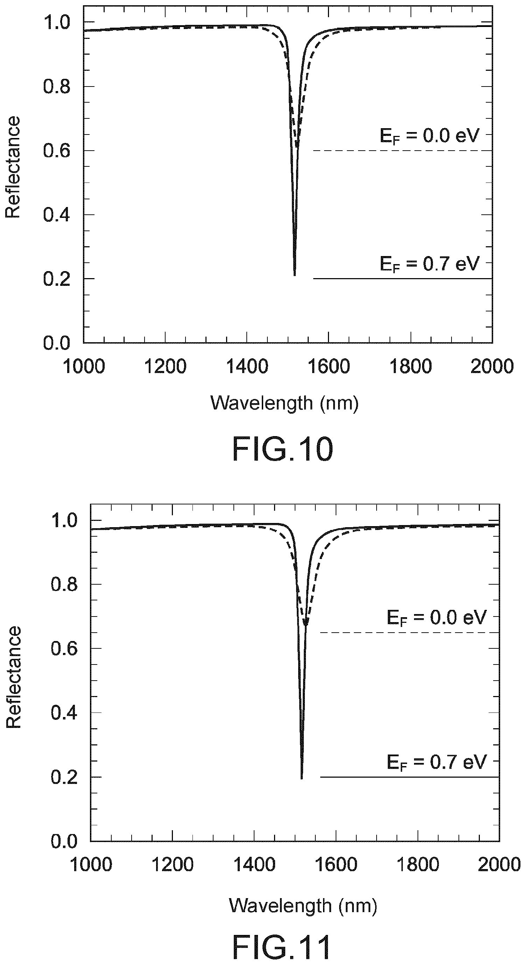

Fig. 9 is a graph showing a reflected light spectrum of the optical element according to Comparative Example, Fig. 10 shows a reflected light spectrum of the optical element according to Example 1, and Fig. 11 shows a reflected light spectrum of the optical element according to Example 2.

In each of Figs. 9 to 11, a solid line shows a reflected light spectrum when a charge of 0.7 eV is injected into the transparent conductive thin film (graphene), and a dashed line shows a reflected light spectrum when the transparent conductive thin film is electrically neutral (0.0 eV). Fermi energy Ef of the transparent conductor film is modulated by 0.7 eV by charge injection.

As shown in Fig. 9, the optical element according to Comparative Example exhibited reflected light modulation of about 30% by the injection of charge into the transparent conductive thin film. On the other hand, as shown in Fig. 10, the optical element according to Example 1 exhibited the reflected light modulation of about 40% by the injection of charge into the transparent conductive thin film.

Furthermore, as shown in Fig. 11, the optical element according to Example 2 exhibited the reflected light modulation of about 50% by the injection of charge into the transparent conductive thin film.

Thus, it can be seen that each of the optical elements according to Examples 1 and 2 has a higher modulation factor with respect to the optical element according to Comparative Example.

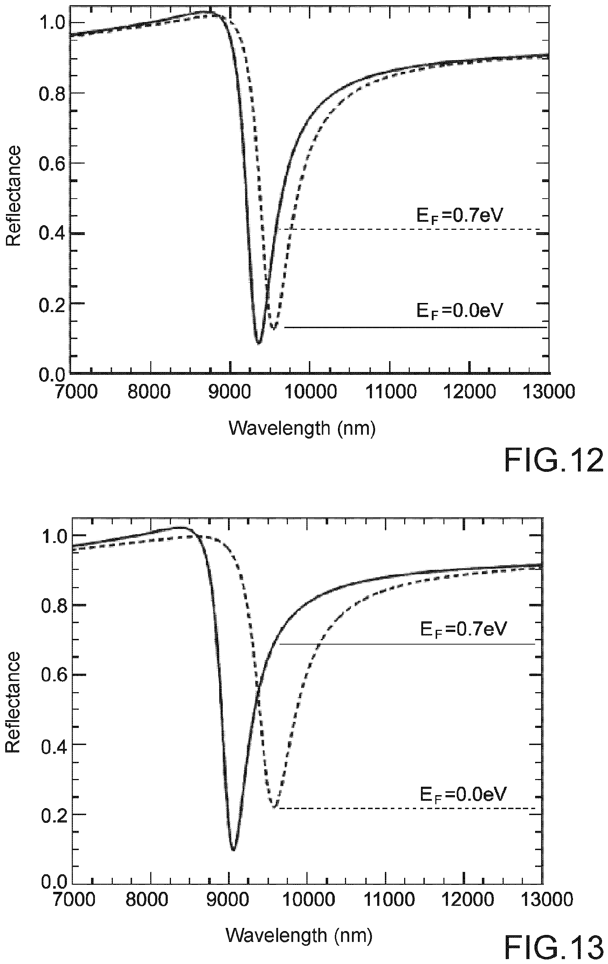

Fig. 12 is a graph showing a reflected light spectrum of the optical element according to Comparative Example of Example 3, and Fig. 13 shows a reflected light spectrum of the optical element according to Example 3.

In each of Figs. 12 to 13, the solid line shows a reflected light spectrum when the charge of 0.7 eV is injected into the transparent conductive thin film (graphene), and the dashed line shows a reflected light spectrum when the transparent conductive thin film is electrically neutral (0.0 eV). The Fermi energy Ef of the transparent conductor film is modulated by 0.7 eV by the charge injection.

As shown in Fig. 12, the optical element according to Comparative Example of Example 3 exhibited the light modulation of about 27% (increase in reflectance) at a wavelength of 9600 nm by the charge injection into the transparent conductor thin film. On the other hand, as shown in Fig. 13, the optical element according to Example 3 exhibited about 45% light modulation (increase in reflectance) at a wavelength of 9600 nm by the charge injection into the transparent conductor thin film.

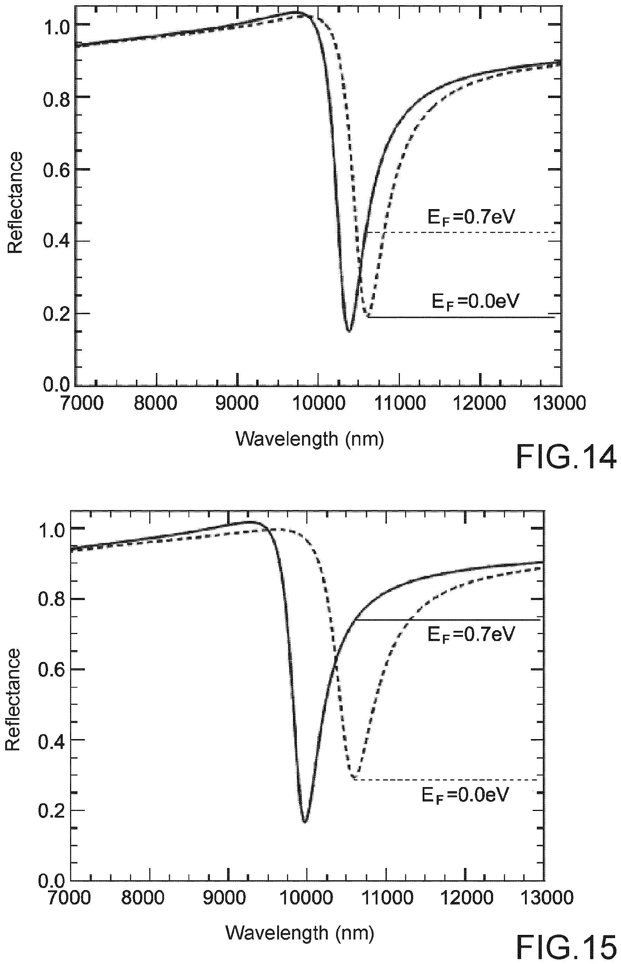

Fig. 14 is a graph showing a reflected light spectrum of the optical element according to Comparative Example of Example 4, and Fig. 15 shows a reflected light spectrum of the optical element according to Example 4.

In each of Figs. 14 to 15, the solid line shows a reflected light spectrum when the charge of 0.7 eV is injected into the transparent conductive thin film (graphene), and the dashed line shows a reflected light spectrum when the transparent conductive thin film is electrically neutral (0.0 eV). The Fermi energy Ef of the transparent conductor film is modulated by 0.7 eV by the charge injection.

As shown in Fig. 14, the optical element according to Comparative Example of Example 4 exhibited light modulation of about 24% (increase in reflectance) at a wavelength of 10600 nm by the charge injection into the transparent conductor thin film. On the other hand, as shown in Fig. 15, the optical element according to Example 4 exhibited about 45% light modulation (increase in reflectance) at a wavelength of 10600 nm by the charge injection into the transparent conductor thin film.

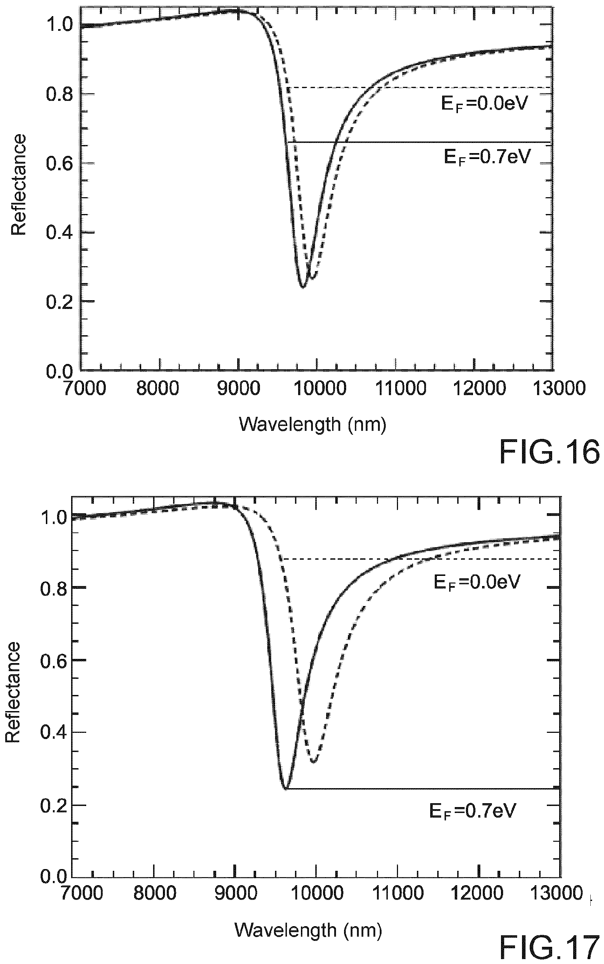

Fig. 16 is a graph showing a reflected light spectrum of the optical element according to Comparative Example of Example 5, and Fig. 17 shows a reflected light spectrum of the optical element according to Example 5.

In each of Figs. 16 to 17, the solid line shows a reflected light spectrum when the charge of 0.7 eV is injected into the transparent conductive thin film (graphene), and the dashed line shows a reflected light spectrum when the transparent conductive thin film is electrically neutral (0.0 eV). The Fermi energy Ef of the transparent conductor film is modulated by 0.7 eV by the charge injection.

As shown in Fig. 16, the optical element according to Comparative Example of Example 5 exhibited light modulation of about 17% (decrease in reflectance) at a wavelength of 9600 nm by the charge injection into the transparent conductor thin film. On the other hand, as shown in Fig. 17, the optical element according to Example 5 exhibited about 56% light modulation (reduction in reflectance) at a wavelength of 9600 nm by the charge injection into the transparent conductor thin film.

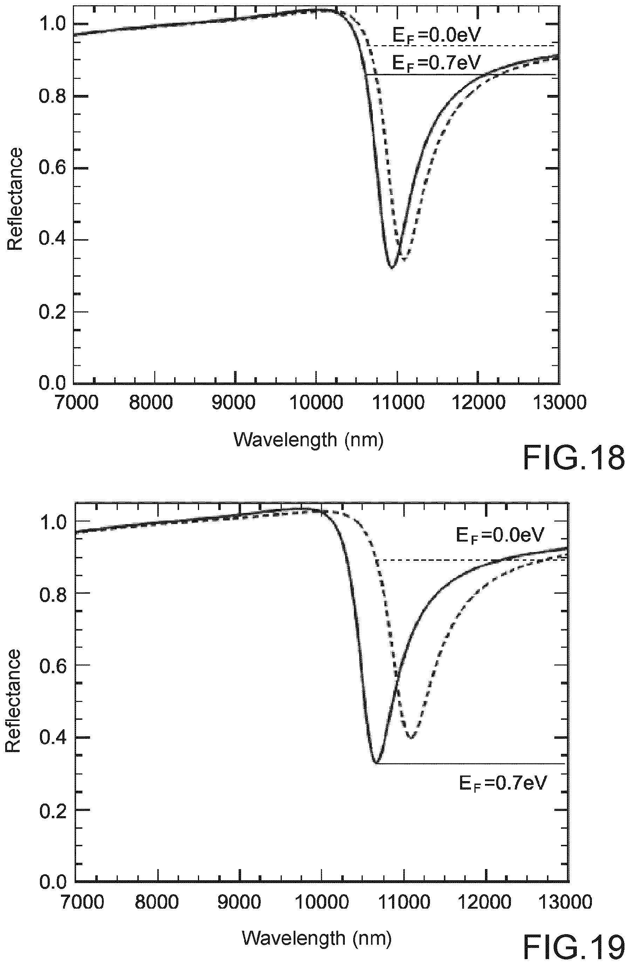

Fig. 18 is a graph showing a reflected light spectrum of the optical element according to Comparative Example of Example 6, and Fig. 19 shows a reflected light spectrum of the optical element according to Example 6.

In each of Figs. 18 to 19, the solid line shows a reflected light spectrum when the charge of 0.7 eV is injected into the transparent conductive thin film (graphene), and the dashed line shows a reflected light spectrum when the transparent conductive thin film is electrically neutral (0.0 eV). The Fermi energy Ef of the transparent conductor film is modulated by 0.7 eV by the charge injection.

As shown in Fig. 18, the optical element according to Comparative Example exhibited light modulation of about 10% (decrease in reflectance) at a wavelength of 10600 nm by the charge injection into the transparent conductor thin film. On the other hand, as shown in Fig. 19, the optical element according to Example 6 exhibited about 55% light modulation (reduction in reflectance) at a wavelength of 10600 nm by the charge injection into the transparent conductor thin film.

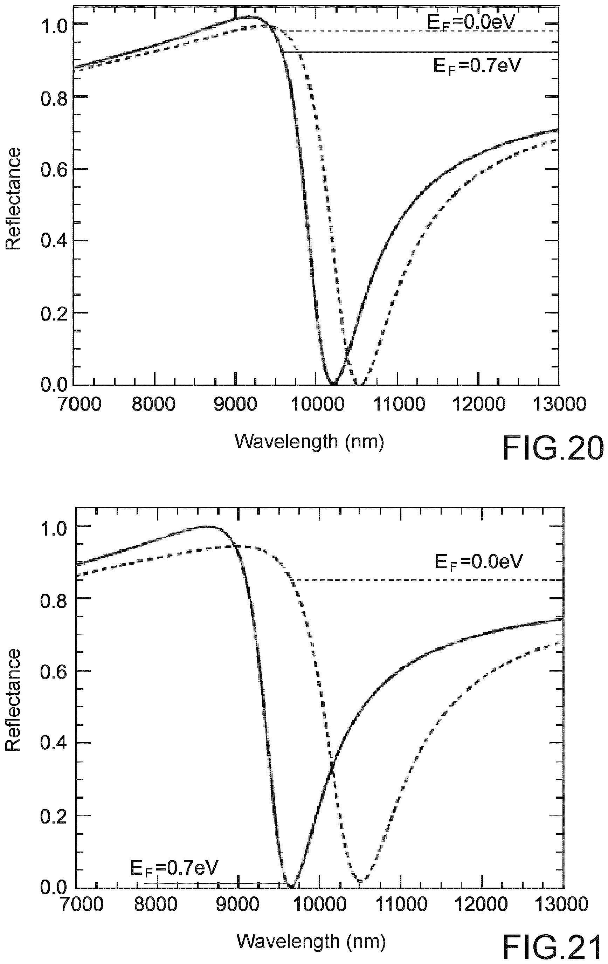

Fig. 20 is a graph showing a reflected light spectrum of the optical element according to Comparative Example of Example 7, Fig. 21 shows a reflected light spectrum of the optical element according to Example 7.

In each of Figs. 20 to 21, the solid line shows a reflected light spectrum when the charge of 0.7 eV is injected into the transparent conductive thin film (graphene), and the dashed line shows a reflected light spectrum when the transparent conductive thin film is electrically neutral (0.0 eV). The Fermi energy Ef of the transparent conductor film is modulated by 0.7 eV by the charge injection.

As shown in Fig. 20, the optical element according to Comparative Example exhibited light modulation of about 6% (decrease in reflectance) at a wavelength of 9600 nm by the charge injection into the transparent conductor thin film. On the other hand, as shown in Fig. 21, the optical element according to Example 7 exhibited about 82% light modulation (reduction in reflectance) at a wavelength of 9600 nm by the charge injection into the transparent conductor thin film.

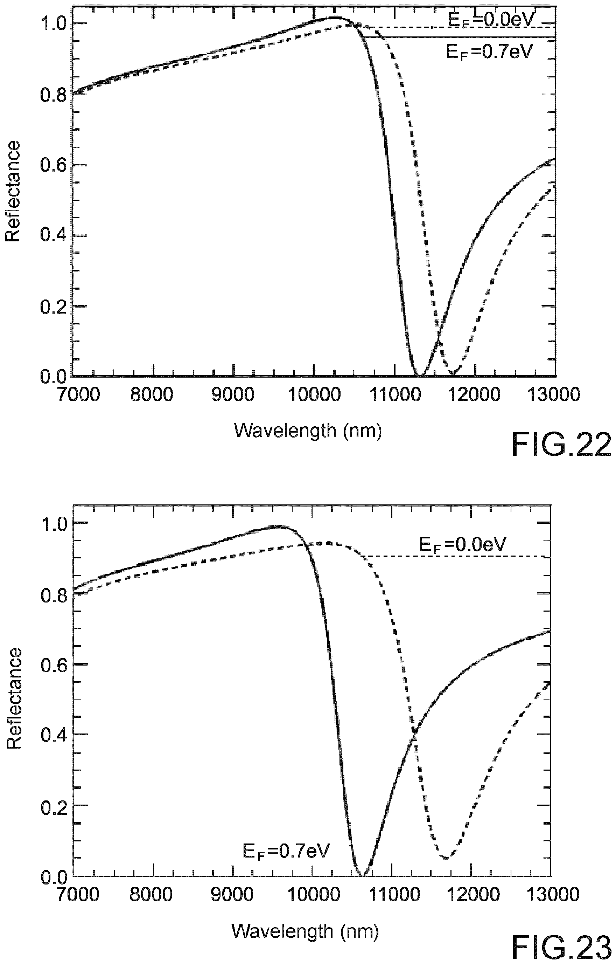

Fig. 22 is a graph showing a reflected light spectrum of the optical element according to Comparative Example of Example 8, and Fig. 23 shows a reflected light spectrum of the optical element according to Example 8.

In each of Figs. 22 to 23, the solid line shows a reflected light spectrum when the charge of 0.7 eV is injected into the transparent conductive thin film (graphene), and the dashed line shows a reflected light spectrum when the transparent conductive thin film is electrically neutral (0.0 eV). The Fermi energy Ef of the transparent conductor film is modulated by 0.7 eV by the charge injection.

As shown in Fig. 22, the optical element according to Comparative Example exhibited light modulation of about 3% (decrease in reflectance) at a wavelength of 10600 nm by the charge injection into the transparent conductor thin film. On the other hand, as shown in Fig. 23, the optical element according to Example 8 exhibited about 86% light modulation (reduction in reflectance) at a wavelength of 10600 nm by the charge injection into the transparent conductive thin film.

Thus, it can be seen that each of the optical elements according to Examples 3, 4, 5, 6, 7 and 8 has a higher modulation factor with respect to the optical elements according to Comparative Example. It can be seen that depending on the configuration of the optical element, it is possible to control a behavior of the light modulation (decrease or increase in reflectance).

### Reference Signs List

- 100: optical element
- 101: substrate
- 102: first light reflecting layer
- 103: first dielectric thick film layer
- 104: multilayer film laminate
- 105: second dielectric thick film layer
- 106: second light reflecting layer
- 107: electrode
- 110: transparent conductor thin film
- 111: dielectric thin film

## Claims

1. An optical element (100, 200), comprising:
a first light reflecting layer (102, 202);
a first dielectric thick film layer (103, 203) formed of a dielectric and arranged on the first light reflecting layer (102, 202);
a multilayer film laminate (104, 204) arranged on the first dielectric thick film layer (103, 203) that includes a plurality of transparent conductor thin films (110) capable of controlling optical transition energy by a Fermi level adjustment and a dielectric thin film (111) that is an atomic layer thin film arranged between a plurality of the transparent conductor thin films;
a second dielectric thick film layer formed of a dielectric and arranged on the multilayer film laminate; and
a second light reflecting layer arranged on the second dielectric thick film layer, wherein the optical element is capable of applying a predetermined potential difference between any one of the first light reflecting layer (102, 202) or the second light reflecting layer (106, 206) and the transparent conductor thin films (110).

2. The optical element (100) according to claim 1, wherein
the multilayer film laminate includes a plurality of the dielectric thin films (111).

3. The optical element (100) according to claim 1, wherein
a plurality of the transparent conductive thin films (110) is a graphene thin film, a carbon thin film, a carbon nanotube thin film, an atomic layer thin film having metallic characteristics, semi-metallic characteristics or a narrow band gap, or a conductive thin film capable of forming an impurity level in a band gap of 3 eV or more and 4 eV or less and capable of carrier trapping.

4. The optical element (100) according to claim 1, wherein
each of a plurality of the transparent conductor thin films (110) is an atomic layer thin film including an atomic layer thin film of one atomic layer or two atomic layers, or a conductive thin film having a thickness of 0.1 nm or more and 5 nm or less.

5. The optical element (100) according to claim 3, wherein
the atomic layer thin film is formed of a layered compound including any one element of C, Si, Ge, Sb, and P.

6. The optical element (100) according to claim 3, wherein
the atomic layer thin film is formed of
a layered compound represented by a composition formula of MX₂, where M is any of Ti, Zr, Hf, V, Nb, Ta, Mo, W, Sc, Mn, Fe, Ni, Cr, Pd, Pt, Re, Ga, Ge, Sn, Pb and In, and X is any of O, S, Se, and Te,
a layered compound represented by a composition formula of MX, where M is Ga or In, and X is any of O, S, Se, and Te, or
a layered compound represented by a composition formula of M₂X₃, where M is Bi, and X is any of O, S, Se, and Te.

7. The optical element (100) according to claim 3, wherein
the atomic layer thin film is formed of a layered compound represented by a composition formula of L_{X}M₁₋ₓA_{y}B_{1-Y} (0 < X < 1), (0 ≤ Y ≤ 1), where
L is any of Ti, Zr, Hf, V, Nb, Ta, Mo, W, Sc, Mn, Fe, Ni, Cr, Pd, Pt, Re, Ga, Ge, Sn, Pb and In,
M is any of Ti, Zr, Hf, V, Nb, Ta, Mo, W, Sc, Mn, Fe, Ni, Cr, Pd, Pt, Re, Ga, Ge, Sn, Pb and In,
A is any of N, O, P, S, Se, and Te, and
B is any of N, O, P, S, Se, and Te.

8. The optical element (100) according to claim 3, wherein
the conductive thin film is formed of an oxide represented by a composition formula of L_{X}M_{Y}O (0 ≤ X ≤ 1, 0 ≤ Y ≤ 1), where
L is any of Sb, F, As, Nb, Ta, Sn, Ge, Mo, Ti, Zr, Hf, W, Te, Al, Ga, B, In, Y, Sc, V, and Si, and
M is any of Sb, F, As, Nb, Ta, Sn, Ge, Mo, Ti, Zr, Hf, W, Te, Al, Ga, B, In, Y, Sc, V, and Si.

9. The optical element (100) according to claim 1, wherein
the dielectric thin film is a dielectric atomic layer thin film or a semiconductor atomic layer thin film having a band gap of 1 meV or more.

10. The optical element (100) according to claim 9, wherein
the dielectric thin film (111) has a thickness of 10 nm or less.

11. The optical element (100) according to claim 9, wherein
the dielectric atomic layer thin film is formed of hexagonal boron nitride.

12. The optical element (100) according to claim 9, wherein
the dielectric atomic layer thin film is formed of a layered compound represented by a composition formula of MX₂, where
M is Ti, Zr, Hf, V, Nb, Ta, Mo, W, Sc, Mn, Fe, Ni, Cr, Pd, Pt, Re, Ga, Ge, Sn, Pb, and In, and
X is any of O, S, Se, and Te.

13. The optical element (100) according to claim 9, wherein
the dielectric thin film is formed of a layered compound called mica represented by a composition formula of X₂Y_{4~6}Z₈O₂₀A₄, where
X is any of K, Na, Ca, Ba, Rb, and Cs,
Y is any of Al, Mg, Fe, Mn, Cr, Ti and Li,
Z is any of Si, Al, Fe, and Ti, and
A is OH or F.

14. The optical element (100) according to claim 9, wherein
the dielectric thin film is formed of any of Al₂O₃, HfO₂, SiO₂, La₂O₃, SiO₂, ZrO₂, SrTiO₃, Ta₂O₅, Ti_{0.87}O₂, Ti_{0.91}O₂, Ti₄O₉, Ti₄O₁₁, TiO₂, ZnO, RuO₂, MnO₂, VS₂, LaAlO₃, Nb₂O₅, SiN, BN, BiFeO₃, BaTiO₃, SiTiO₃, PbZrO₃, PbTiO₃, PbZrTiO₃, SrBi₂Ta₂O₉, and Ba₁₋ₓSrₓTiO₃ (0 ≤ x ≤ 1) .

15. An electronic apparatus, comprising:
an optical element (100) according to claims 1 to 14.

## Patentansprüche

1. Optisches Element (100, 200), umfassend:
eine erste Lichtreflexionsschicht (102, 202);
eine erste dielektrische Dickfilmschicht (103, 203), die aus einem Dielektrikum gebildet ist und auf der ersten Lichtreflexionsschicht (102, 202) angeordnet ist;
ein Mehrschichtfilmlaminat (104, 204), das auf der ersten dielektrischen Dickfilmschicht (103, 203) angeordnet ist, das eine Vielzahl von transparenten Leiterdünnfilmen (110), die in der Lage sind, optische Übergangsenergie durch Anpassung eines Fermi-Niveaus zu steuern, und einen dielektrischen Dünnfilm (111) einschließt, der ein atomarer Schichtdünnfilm ist, der zwischen einer Vielzahl der transparenten Leiterdünnfilme angeordnet ist;
eine zweite dielektrische Dickfilmschicht, die aus einem Dielektrikum gebildet und auf dem Mehrschichtfilmlaminat angeordnet ist; und
eine zweite Lichtreflexionsschicht, die auf der zweiten dielektrischen Dickfilmschicht angeordnet ist, wobei das optische Element in der Lage ist, eine vorbestimmte Potentialdifferenz zwischen einer beliebigen von der ersten Lichtreflexionsschicht (102, 202) oder der zweiten Lichtreflexionsschicht (106, 206) und den transparenten Leiterdünnfilmen (110) anzulegen.

2. Optisches Element (100) nach Anspruch 1, wobei das Mehrschichtfilmlaminat eine Vielzahl der dielektrischen Dünnfilme (111) einschließt.

3. Optisches Element (100) nach Anspruch 1, wobei eine Vielzahl der transparenten leitfähigen Dünnfilme (110) ein Graphendünnfilm, ein Kohlenstoffdünnfilm, ein Kohlenstoffnanoröhrchendünnfilm, ein atomarer Schichtdünnfilm mit metallischen Charakteristika, halbmetallischen Charakteristika oder einer schmalen Bandlücke, oder ein leitfähiger Dünnfilm ist, der in der Lage ist, ein Störstellenniveau in einer Bandlücke von 3 eV oder mehr und 4 eV oder weniger zu bilden und zu Trägereinfang in der Lage ist.

4. Optisches Element (100) nach Anspruch 1, wobei jeder von einer Vielzahl der transparenten Leiterdünnfilme (110) ein atomarer Schichtdünnfilm ist, der einen atomaren Schichtdünnfilm aus einer atomaren Schicht oder zwei atomaren Schichten einschließt, oder ein leitfähiger Dünnfilm mit einer Dicke von 0,1 nm oder mehr und 5 nm oder weniger ist.

5. Optisches Element (100) nach Anspruch 3, wobei der atomare Schichtdünnfilm aus einer geschichteten Verbindung gebildet ist, die ein beliebiges Element aus C, Si, Ge, Sb und P einschließt.

6. Optisches Element (100) nach Anspruch 3, wobei
der atomare Schichtdünnfilm gebildet ist aus:
einer geschichteten Verbindung, die durch eine Zusammensetzungsformel MX₂ wiedergegeben wird, wobei M jedwedes von Ti, Zr, Hf, V, Nb, Ta, Mo, W, Sc, Mn, Fe, Ni, Cr, Pd, Pt, Re, Ga, Ge, Sn, Pb und In ist, und X jedwedes von O, S, Se und Te ist,
einer geschichteten Verbindung, die durch eine Zusammensetzungsformel MX wiedergegeben wird, wobei M Ga oder In ist, und X jedwedes von O, S, Se und Te ist, oder
einer geschichteten Verbindung, die durch eine Zusammensetzungsformel M₂X₃ wiedergegeben wird, wobei M Bi ist, und X jedwedes von O, S, Se und Te ist.

7. Optisches Element (100) nach Anspruch 3, wobei
der atomare Schichtdünnfilm aus einer geschichteten Verbindung gebildet ist, die durch eine Zusammensetzungsformel LₓM₁₋ₓA_{y}B_{1-y} (0 < X < 1), (0 ≤ Y ≤ 1) wiedergegeben wird, wobei
L jedwedes von Ti, Zr, Hf, V, Nb, Ta, Mo, W, Sc, Mn, Fe, Ni, Cr, Pd, Pt, Re, Ga, Ge, Sn, Pb und In ist,
M jedwedes von Ti, Zr, Hf, V, Nb, Ta, Mo, W, Sc, Mn, Fe, Ni, Cr, Pd, Pt, Re, Ga, Ge, Sn, Pb und In ist,
A jedwedes von N, O, P, S, Se und Te ist, und
B jedwedes von N, O, P, S, Se und Te ist.

8. Optisches Element (100) nach Anspruch 3, wobei
der leitfähige Dünnfilm aus einem Oxid gebildet ist, das durch eine Zusammensetzungsformel L_{X}M_{Y}O (0 ≤ X ≤ 1, 0 ≤ Y ≤ 1) wiedergegeben wird, wobei
L jedwedes von Sb, F, As, Nb, Ta, Sn, Ge, Mo, Ti, Zr, Hf, W, Te, Al, Ga, B, In, Y, Sc, V und Si ist, und
M jedwedes von Sb, F, As, Nb, Ta, Sn, Ge, Mo, Ti, Zr, Hf, W, Te, Al, Ga, B, In, Y, Sc, V und Si ist.

9. Optisches Element (100) nach Anspruch 1, wobei der dielektrische Dünnfilm ein dielektrischer atomarer Schichtdünnfilm oder ein Halbleiter-atomarer Schichtdünnfilm mit einer Bandlücke von 1 meV oder mehr ist.

10. Optisches Element (100) nach Anspruch 9, wobei der dielektrische Dünnfilm (111) eine Dicke von 10 nm oder weniger hat.

11. Optisches Element (100) nach Anspruch 9, wobei der dielektrische atomare Schichtdünnfilm aus hexagonalem Bornitrid gebildet ist.

12. Optisches Element (100) nach Anspruch 9, wobei der dielektrische atomare Schichtdünnfilm aus einer geschichteten Verbindung gebildet ist, die durch eine Zusammensetzungsformel MX₂ wiedergegeben wird, wobei
M Ti, Zr, Hf, V, Nb, Ta, Mo, W, Sc, Mn, Fe, Ni, Cr, Pd, Pt, Re, Ga, Ge, Sn, Pb und In ist, und
X jedwedes von O, S, Se und Te ist.

13. Optisches Element (100) nach Anspruch 9, wobei der dielektrische Dünnfilm aus einer als Glimmer bezeichneten geschichteten Verbindung gebildet ist, die durch eine Zusammensetzungsformel X₂Y_{4~6}Z₈O₂₀A₄ wiedergegeben wird, wobei
X jedwedes von K, Na, Ca, Ba, Rb und Cs ist,
Y jedwedes von Al, Mg, Fe, Mn, Cr, Ti und Li ist,
Z jedwedes von Si, Al, Fe und Ti ist, und
A OH oder F ist.

14. Optisches Element (100) nach Anspruch 9, wobei
der dielektrische Dünnfilm aus jedweden von Al₂O₃, HfO₂, SiO₂, La₂O₃, SiO₂, ZrO₂, SrTiO₃, Ta₂O₅, Ti_{0,87}O₂, Ti_{0.91}O₂, Ti₄O₉, Ti₄O₁₁, TiO₂, ZnO, RuO₂, MnO₂, VS₂, LaAlO₃, Nb₂O₅, SiN, BN, BiFeO₃, BaTiO₃, SiTiO₃, PbZrO₃, PbTiO₃, PbZrTiO₃, SrBi₂Ta₂O₉ und Ba₁₋ₓSrₓTiO₃ (0 ≤ x ≤ 1) gebildet ist.

15. Elektronische Vorrichtung, umfassend:
ein optisches Element (100) nach einem der Ansprüche 1 bis 14.

## Revendications

1. Élément optique (100, 200), comprenant :
une première couche réfléchissant la lumière (102, 202) ;
une première couche de film épais diélectrique (103, 203) constituée d'un diélectrique et disposée sur la première couche réfléchissant la lumière (102, 202) ;
un stratifié de films multicouche (104, 204) disposé sur la première couche de film épais diélectrique (103, 203) qui comporte une pluralité de films minces conducteurs transparents (110) pouvant contrôler l'énergie de transition optique par un ajustement du niveau de Fermi et un film mince diélectrique (111) qui est un film mince à couches atomiques disposé entre une pluralité des films minces conducteurs transparents ;
une deuxième couche de film épais diélectrique constituée d'un diélectrique et disposée sur le stratifié de films multicouche ; et
une deuxième couche réfléchissant la lumière disposée sur la deuxième couche de film épais diélectrique, l'élément optique pouvant appliquer une différence de potentiel prédéterminée entre n'importe quelle couche parmi la première couche réfléchissant la lumière (102, 202) et la deuxième couche réfléchissant la lumière (106, 206), et les films minces conducteurs transparents (110).

2. Élément optique (100) selon la revendication 1, dans lequel
le stratifié de films multicouche comporte une pluralité des films minces diélectriques (111).

3. Élément optique (100) selon la revendication 1, dans lequel
une pluralité des films minces conducteurs transparents (110) est un film mince de graphène, un film mince de carbone, un film mince de nanotubes de carbone, un film mince à couches atomiques ayant des caractéristiques métalliques, des caractéristiques semi-métalliques ou une bande interdite étroite, ou un film mince conducteur pouvant former un niveau d'impureté dans une bande interdite de 3 eV ou plus et 4 eV ou moins et pouvant piéger des porteurs.

4. Élément optique (100) selon la revendication 1, dans lequel
chacun d'une pluralité des films minces conducteurs transparents (110) est un film mince à couches atomiques comportant un film mince à couches atomiques d'une couche atomique ou deux couches atomiques, ou un film mince conducteur ayant une épaisseur de 0,1 nm ou plus et 5 nm ou moins.

5. Élément optique (100) selon la revendication 3, dans lequel
le film mince à couches atomiques est constitué d'un composé stratifié comportant n'importe quel élément parmi C, Si, Ge, Sb et P.

6. Élément optique (100) selon la revendication 3, dans lequel
le film mince à couches atomiques est constitué
d'un composé stratifié représenté par une formule compositionnelle MX₂, où M est n'importe quel élément parmi Ti, Zr, Hf, V, Nb, Ta, Mo, W, Sc, Mn, Fe, Ni, Cr, Pd, Pt, Re, Ga, Ge, Sn, Pb et In, et X est n'importe quel élément parmi O, S, Se et Te,
d'un composé stratifié représenté par une formule compositionnelle MX, où M est Ga ou In, et X est n'importe quel élément parmi O, S, Se et Te, ou
d'un composé stratifié représenté par une formule compositionnelle M₂X₃, où M est Bi, et X est n'importe quel élément parmi O, S, Se et Te.

7. Élément optique (100) selon la revendication 3, dans lequel
le film mince à couches atomiques est constitué d'un composé stratifié représenté par une formule compositionnelle L_{X}M_{1-X}A_{Y}B_{1-Y} (0 < X < 1), (0 ≤ Y ≤ 1), où
L est n'importe quel élément parmi Ti, Zr, Hf, V, Nb, Ta, Mo, W, Sc, Mn, Fe, Ni, Cr, Pd, Pt, Re, Ga, Ge, Sn, Pb et In,
M est n'importe quel élément parmi Ti, Zr, Hf, V, Nb, Ta, Mo, W, Sc, Mn, Fe, Ni, Cr, Pd, Pt, Re, Ga, Ge, Sn, Pb et In,
A est n'importe quel élément parmi N, O, P, S, Se et Te, et
B est n'importe quel élément parmi N, O, P, S, Se et Te.

8. Élément optique (100) selon la revendication 3, dans lequel
le film mince conducteur est constitué d'un oxyde représenté par une formule compositionnelle L_{X}M_{Y}O (0 ≤ X ≤ 1), 0 ≤ Y ≤ 1), où
L est n'importe quel élément parmi Sb, F, As, Nb, Ta, Sn, Ge, Mo, Ti, Zr, Hf, W, Te, Al, Ga, B, In, Y, Sc, V et Si, et
M est n'importe quel élément parmi Sb, F, As, Nb, Ta, Sn, Ge, Mo, Ti, Zr, Hf, W, Te, Al, Ga, B, In, Y, Sc, V et Si.

9. Élément optique (100) selon la revendication 1, dans lequel
le film mince diélectrique est un film mince à couches atomiques diélectrique ou un film mince à couches atomiques semi-conducteur ayant une bande interdite de l meV ou plus.

10. Élément optique (100) selon la revendication 9, dans lequel
le film mince diélectrique (111) a une épaisseur de 10 nm ou moins.

11. Élément optique (100) selon la revendication 9, dans lequel
le film mince à couches atomiques diélectrique est constitué de nitrure de bore hexagonal.

12. Élément optique (100) selon la revendication 9, dans lequel
le film mince à couches atomiques diélectrique est constitué d'un composé stratifié représenté par une formule compositionnelle MX₂, où
M est Ti, Zr, Hf, V, Nb, Ta, Mo, W, Sc, Mn, Fe, Ni, Cr, Pd, Pt, Re, Ga, Ge, Sn, Pb et In, et
X est n'importe quel élément parmi O, S, Se et Te.

13. Élément optique (100) selon la revendication 9, dans lequel
le film mince diélectrique est constitué d'un composé stratifié appelé mica représenté par une formule compositionnelle X₂Y_{4~6}Z₈O₂₀A₄, où
X est n'importe quel élément parmi K, Na, Ca, Ba, Rb et Cs,
Y est n'importe quel élément parmi Al, Mg, Fe, Mn, Cr, Ti et Li,
Z est n'importe quel élément parmi Si, Al, Fe et Ti, et
A est OH ou F.

14. Élément optique (100) selon la revendication 9, dans lequel
le film mince diélectrique est constitué de n'importe quel composé parmi Al₂O₃, HfO₂, SiO₂, La₂O₃, SiO₂, ZrO₂, SrTiO₃, Ta₂O₅, Ti_{0,87}O₂, Ti_{0.91}O₂, Ti₄O₉, Ti₄O₁₁, TiO₂, ZnO, RuO₂, MnO₂, VS₂, LaAlO₃, Nb₂O₅, SiN, BN, BiFeO₃, BaTiO₃, SiTiO₃, PbZrO₃, PbTiO₃, PbZrTiO₃, SrBi₂Ta₂O₉ et Ba₁₋ₓSrₓTiO₃ (0 ≤ x ≤ 1) .

15. Appareil électronique, comprenant :
un élément optique (100) selon les revendications 1 à 14.
